# EUROPEAN PATENT SPECIFICATION

(11) **EP 4 625 085 B1**
(45) Date of publication and mention of the grant of the patent: **18.11.2026**
(21) Application number: 25165228.5
(22) Date of filing: 21.03.2025
(51) Int. Cl.: G05D 1/223, G05D 1/224, G05D 1/227, G05D 105/15, G05D 107/20, G05D 109/10

(54) **MOVEMENT CONTROL METHOD, MOVEMENT CONTROL PROGRAM, AND MOVEMENT CONTROL SYSTEM**
BEWEGUNGSSTEUERUNGSVERFAHREN, BEWEGUNGSSTEUERUNGSPROGRAMM UND BEWEGUNGSSTEUERUNGSSYSTEM
PROCÉDÉ DE COMMANDE DE MOUVEMENT, PROGRAMME DE COMMANDE DE MOUVEMENT ET SYSTÈME DE COMMANDE DE MOUVEMENT

(30) Priority: 26.03.2024 JP 2024048928
(43) Date of publication of application: 01.10.2025
(73) Proprietor: Yanmar Holdings Co., Ltd., Osaka-shi, Osaka (JP)
(72) Inventor: NISHII, Yasuto, Okayama-shi (JP); MURAYAMA, Masaaki, Okayama-shi (JP); NISHIBEPPU, Shinya, Okayama-shi (JP)
(74) Representative: Sekiguchi, Kazuya

(56) References cited:
- WO-A1-2023/276341
- US-A1- 2017 177 002
- US-A1- 2022 286 957

## Description

### TECHNICAL FIELD

The present invention relates to a technique for controlling movement of a work vehicle capable of automatic traveling.

### BACKGROUND ART

Conventionally, there is known a technique in which a work vehicle is caused to automatically travel in a work area according to a target route that is set in advance. Further, there is also known a technique in which a work vehicle during automatic traveling is remotely monitored (for example, see Patent Document 1).

### PRIOR ART DOCUMENT

### PATENT DOCUMENT

Patent Document 1: Japanese Patent No. 6253678

Other examples of the prior art documents include: WO 2023/276341A1, US2022/286957A1, US 2017/177002A1.

### SUMMARY OF INVENTION

### TECHNICAL PROBLEM

In a system capable of remotely monitoring a work vehicle, a near-field operation terminal such as a remote controller that can be operated in the vicinity of the work vehicle, and a far-field operation terminal that can be remotely operated may be used together. In this case, it is necessary to set a movement content by which the work vehicle can be moved, for each operation terminal. However, in the conventional art, it is difficult to flexibly set the movement content, and it is difficult to appropriately control movement of the work vehicle.

An object of the present invention is to provide a movement control method, a movement control program, and a movement control system that enable to appropriately control a work vehicle, in a case where a near-field operation terminal and a far-field operation terminal are used together.

### SOLUTION TO PROBLEM

A movement control method according to the present invention is a movement control method of controlling movement of a work vehicle by a first operation terminal capable of moving the work vehicle within a predetermined range with respect to the work vehicle, and a second operation terminal capable of moving the work vehicle within the predetermined range with respect to the work vehicle. The movement control method includes: setting either of a first mode in which movement of the work vehicle by the first operation terminal is permitted, and a second mode in which movement of the work vehicle by the second operation terminal is permitted; and setting a movement content by which the first operation terminal is capable of moving the work vehicle, and a movement content by which the second operation terminal is capable of moving the work vehicle, based on the set mode.

Further, a movement control program according to the present invention is a movement control program that controls movement of a work vehicle by a first operation terminal capable of moving the work vehicle within a predetermined range with respect to the work vehicle, and a second operation terminal capable of moving the work vehicle within the predetermined range with respect to the work vehicle. The movement control program is a movement control program for causing one or a plurality of processors to execute: setting either of a first mode in which movement of the work vehicle by the first operation terminal is permitted, and a second mode in which movement of the work vehicle by the second operation terminal is permitted; and setting a movement content by which the first operation terminal is capable of moving the work vehicle, and a movement content by which the second operation terminal is capable of moving the work vehicle, based on the set mode.

Further, a movement control system according to the present invention is a movement control system that controls movement of a work vehicle by a first operation terminal capable of moving the work vehicle within a predetermined range with respect to the work vehicle, and a second operation terminal capable of moving the work vehicle within the predetermined range with respect to the work vehicle. The movement control system sets either of a first mode in which movement of the work vehicle by the first operation terminal is permitted, and a second mode in which movement of the work vehicle by the second operation terminal is permitted, and sets a movement content by which the first operation terminal is capable of moving the work vehicle, and a movement content by which the second operation terminal is capable of moving the work vehicle, based on the set mode.

### ADVANTAGEOUS EFFECTS OF INVENTION

According to the present invention, it is possible to provide a movement control method, a movement control program, and a movement control system that enable to appropriately control movement of a work vehicle, in a case where a near-field operation terminal and a far-field operation terminal are used together.

### BRIEF DESCRIPTION OF DRAWINGS

FIG. 1 is a block diagram illustrating a configuration of an automatic traveling system according to an embodiment of the present invention.
FIG. 2 is a schematic diagram illustrating a relationship among a work vehicle, a far-field operation terminal, and a near-field operation terminal according to the embodiment of the present invention.
FIG. 3 is an external view illustrating an example of the work vehicle according to the embodiment of the present invention.
FIG. 4 is a diagram illustrating an example of a map screen to be displayed on an operation terminal according to the embodiment of the present invention.
FIG. 5 is a diagram illustrating an example of the map screen to be displayed on the operation terminal according to the embodiment of the present invention.
FIG. 6 is a diagram illustrating an example of the map screen to be displayed on the operation terminal according to the embodiment of the present invention.
FIG. 7A is a diagram illustrating an example of an operation screen to be displayed on the operation terminal according to the embodiment of the present invention.
FIG. 7B is a diagram illustrating an example of the operation screen to be displayed on the operation terminal according to the embodiment of the present invention.
FIG. 7C is a diagram illustrating an example of the operation screen to be displayed on the operation terminal according to the embodiment of the present invention.
FIG. 8 is a diagram illustrating an example of the map screen and the operation screen to be displayed on the operation terminal according to the embodiment of the present invention.
FIG. 9 is a diagram illustrating registration information on a movement control content of the work vehicle according to the embodiment of the present invention.
FIG. 10 is a diagram illustrating registration information on a movement control content when communication of the work vehicle according to the embodiment of the present invention is cut off.
FIG. 11 is a flowchart illustrating an example of a procedure of movement control processing to be performed by the automatic traveling system according to the embodiment of the present invention.
FIG. 12 is a diagram illustrating an example of detection information on an obstacle to be displayed on the operation terminal according to the embodiment of the present invention.

### DESCRIPTION OF EMBODIMENTS

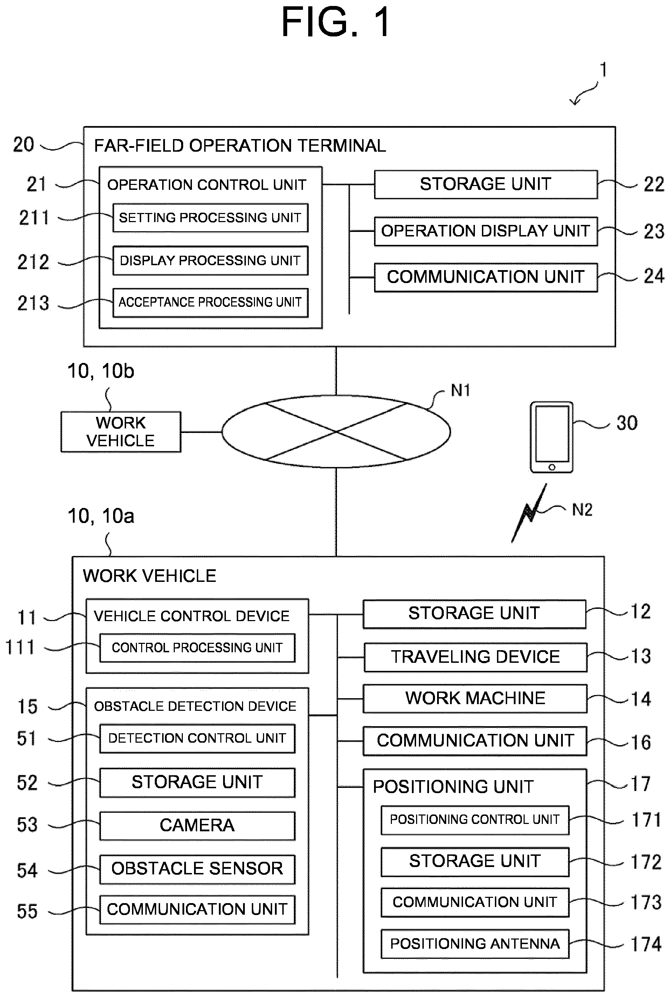

As illustrated in FIG. 1, an automatic traveling system 1 according to an embodiment of the present invention includes a work vehicle 10, a far-field operation terminal 20, and a near-field operation terminal 30. The work vehicle 10 may be one or plural. Further, each of the far-field operation terminal 20 and the near-field operation terminal 30 may be one or plural. In the present embodiment, a case where the automatic traveling system 1 includes a plurality of work vehicles 10 (in FIG. 1, two work vehicles 10a and 10b) is described as an example. Further, the near-field operation terminal 30 is disposed each for each work vehicle 10. The automatic traveling system 1 is a system that controls movement of the work vehicle 10 by the far-field operation terminal 20 and the near-field operation terminal 30. Note that, hereinafter, in a case where the work vehicle 10a and the work vehicle 10b are not distinguished from each other, the work vehicle is referred to as the "work vehicle 10".

The work vehicle 10 and the far-field operation terminal 20 are communicable with each other via a communication network N1. For example, the work vehicle 10 and the far-field operation terminal 20 are communicable with each other via a mobile phone line network, a packet line network, or a wireless LAN. The work vehicle 10 and the near-field operation terminal 30 are communicable with each other via a communication network N2. For example, the work vehicle 10 and the near-field operation terminal 30 are communicable with each other via near field wireless communication such as Bluetooth (registered trademark), a wireless LAN, or infrared communication.

In the present embodiment, a case in which the work vehicle 10 is a tractor is described as an example. Note that, as another embodiment, the work vehicle 10 may be a combine, a rice planting machine, a spreader, a construction machine, a snow plow, or the like. Further, each of the work vehicle 10a and the work vehicle 10b may be a vehicle of a different type, or of the same type. The work vehicle 10 has a configuration in which the work vehicle 10 can automatically travel (autonomously travel) inside a work area of a field according to a target route that is set in advance. Further, the work vehicle 10 can perform predetermined work, while automatically traveling inside the work area. Furthermore, the work vehicle 10 has a configuration in which the work vehicle 10 can automatically travel on a road (a connection route) that connects among a plurality of fields, following an inter-field route that is set in advance.

The work vehicle 10 can automatically travel inside a field and outside the field (on a road) according to a target route and an inter-field route that are set in advance, based on position information on a current position of the work vehicle 10 to be computed by a positioning unit 17. Note that the work vehicle 10 may automatically travel with the operator on board.

For example, when a target route including a work route, a traveling start position, and a traveling finish position are set with respect to a field, the work vehicle 10 performs predetermined work inside the field, while automatically traveling according to the target route from the traveling start position to the traveling finish position.

Further, when the work vehicle 10 finishes work inside one field, the work vehicle 10 can perform work by moving to another field. For example, when the work vehicle 10 finishes work in a first field, the work vehicle 10 moves to a second field by automatically traveling on an inter-field route that is set in advance on a road. When the work vehicle 10 arrives at the second field, the work vehicle 10 performs predetermined work in the second field, while automatically traveling according to a target route that is set in advance.

A target route inside a field is set as appropriate according to a work content. Further, an inter-field route on a road is set in advance according to an operation (a teaching operation) by an operator. The inter-field route may be a road exclusively for a work vehicle, such as a farm road, a forest road, a public road, a private road, and a motorway, or may be a road through which a general vehicle (such as a passenger car) can pass.

The far-field operation terminal 20 and the near-field operation terminal 30 are an operation terminal operable by an operator, and are, for example, a smartphone, a tablet terminal, and the like. The far-field operation terminal 20 and the near-field operation terminal 30 may be equipment having the same function, or equipment having a different function. For example, the far-field operation terminal 20 may be a smartphone, and the near-field operation terminal 30 may be a remote controller.

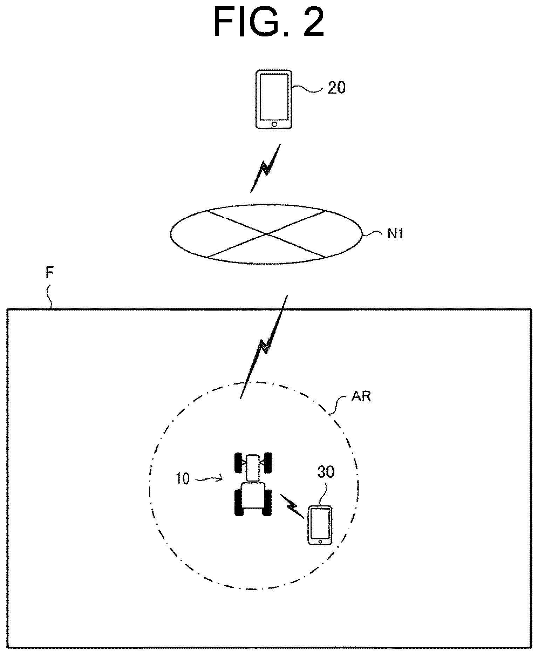

As illustrated in FIG. 2, the near-field operation terminal 30 is operated in a field F by an operator (a worker or the like) in a range (a predetermined range AR) within a predetermined distance from the work vehicle 10. For example, a worker can start automatic traveling of the work vehicle 10, raise or lower a work machine 14, or stop the work vehicle 10 during automatic traveling by operating the near-field operation terminal 30. In a case where the near-field operation terminal 30 is moved out of the predetermined range AR, or the like, and communication with the work vehicle 10 is cut off, a movement instruction for the work vehicle 10 by the near-field operation terminal 30 is restricted (prohibited).

The far-field operation terminal 20 is operated by an operator (a monitoring person or the like) outside the field F (e.g., at a remote place). For example, a monitoring person can operate the far-field operation terminal 20, and display a state of automatic traveling of the work vehicle 10, display an image of a camera 53 loaded in the work vehicle 10, or stop the work vehicle 10 during automatic traveling. In a case where communication of the far-field operation terminal 20 with the work vehicle 10 is cut off due to deterioration of a network environment or the like, a movement instruction for the work vehicle 10 by the far-field operation terminal 20 is restricted (prohibited).

In this way, the near-field operation terminal 30 is mainly utilized for giving a movement instruction, while allowing a worker to visually confirm the work vehicle 10 in the vicinity of the work vehicle 10, and the far-field operation terminal 20 is mainly utilized for a monitoring person to confirm (monitor) the work vehicle 10 by a camera image at a place away from the work vehicle 10.

### [Work Vehicle 10]

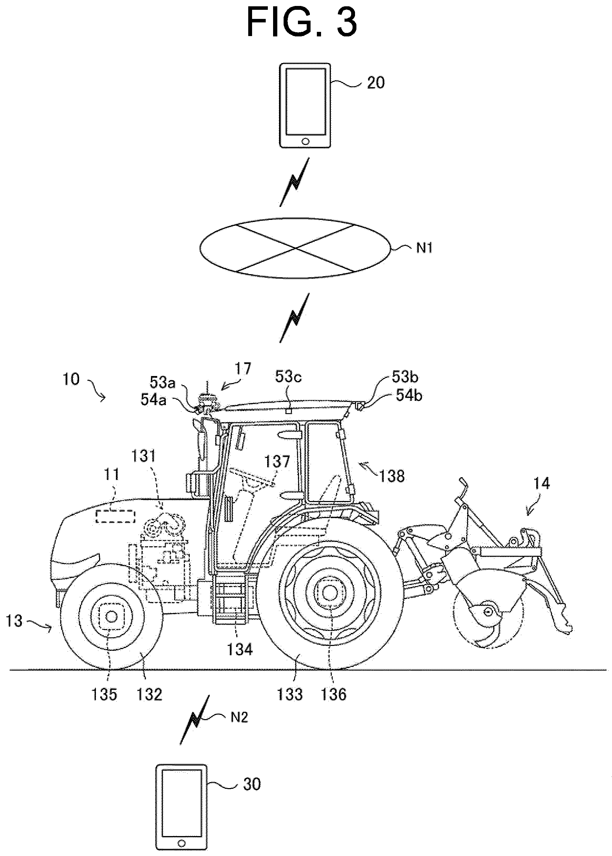

As illustrated in FIGS. 1 and 3, the work vehicle 10 includes a vehicle control device 11, a storage unit 12, a traveling device 13, the work machine 14, an obstacle detection device 15, a communication unit 16, the positioning unit 17, and the like. The vehicle control device 11 is electrically connected to the storage unit 12, the traveling device 13, the work machine 14, the obstacle detection device 15, the positioning unit 17, and the like. Note that, the vehicle control device 11 and the obstacle detection device 15 may be wirelessly communicable with each other, and the vehicle control device 11 and the positioning unit 17 may be wirelessly communicable with each other.

The communication unit 16 is a communication interface that connects the work vehicle 10 to the communication network N1, N2 in a wired or wireless manner, and performs data communication in accordance with a predetermined communication protocol with external equipment (the far-field operation terminal 20, the near-field operation terminal 30, or the like) via the communication network N1, N2.

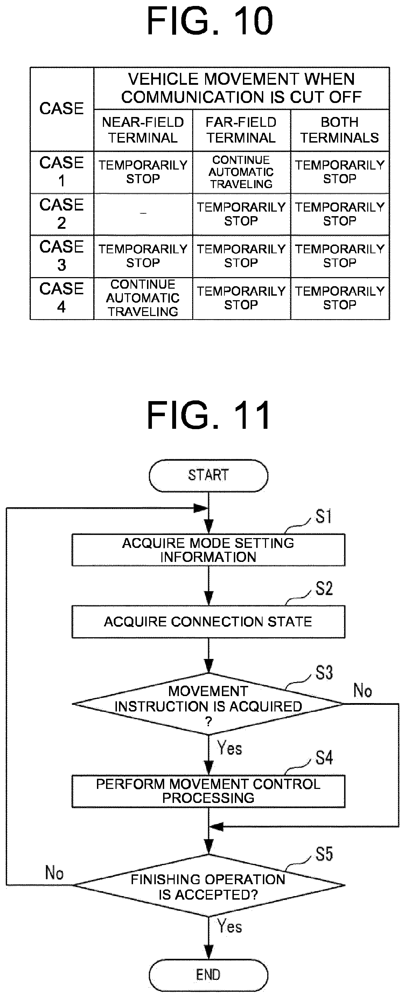

The storage unit 12 is a non-volatile storage unit such as a hard disk drive (HDD), a solid state drive (SSD), or a flash memory that stores various pieces of information. The storage unit 12 stores a control program such as a movement control program for causing the vehicle control device 11 to perform automatic traveling processing to be described later (see FIG. 11). For example, the movement control program is non-transitorily recorded in a computer-readable recording medium such as a CD, or a DVD, read by a predetermined reading device (not illustrated), and stored in the storage unit 12. Note that, the movement control program may be downloaded from a server (not illustrated) to the work vehicle 10 via the communication network N1, and stored in the storage unit 12. Also, the storage unit 12 may store data on a target route, and the like.

The traveling device 13 is a driving unit that causes the work vehicle 10 to travel. As illustrated in FIG. 3, the traveling device 13 includes an engine 131, front wheels 132, rear wheels 133, a transmission 134, a front axle 135, a rear axle 136, a steering wheel 137, and the like. Note that, the front wheel 132 and the rear wheel 133 are provided on each of left and right sides of the work vehicle 10. Further, the traveling device 13 is not limited to a wheel type in which the front wheels 132 and the rear wheels 133 are provided, but may be a crawler type in which a crawler is provided on left and right sides of the work vehicle 10.

The engine 131 is a drive source such as a diesel engine or a gasoline engine that is driven by using fuel to be replenished in an unillustrated fuel tank. The traveling device 13 may include an electric motor as a drive source together with the engine 131, or in place of the engine 131. Note that, the engine 131 is connected to an unillustrated generator, and electric power is supplied from the generator to an electrical component such as the vehicle control device 11, the obstacle detection device 15, and the positioning unit 17 provided in the work vehicle 10, a battery, and the like. Note that, the battery is charged by electric power to be supplied from the generator. Further, the electrical components such as the vehicle control device 11, the obstacle detection device 15, and the positioning unit 17 provided in the work vehicle 10 can also be driven by electric power to be supplied from the battery, even after the engine 131 is stopped.

A driving force of the engine 131 is transmitted to the front wheels 132 via the transmission 134 and the front axle 135, and is transmitted to the rear wheels 133 via the transmission 134 and the rear axle 136. The driving force of the engine 131 is also transmitted to the work machine 14 via a PTO shaft (not illustrated). In a case where the work vehicle 10 performs automatic traveling, the traveling device 13 performs traveling movement in accordance with a command of the vehicle control device 11. Further, the traveling device 13 decelerates or stops the work vehicle 10 in accordance with a command from the vehicle control device 11.

The work machine 14 is, for example, a cultivator, a mower, a plow, a fertilizer applicator, a sprayer (a chemical spraying machine), a soil pudding machine, a seeder, or the like, and is detachably attachable to the work vehicle 10. This allows the work vehicle 10 to perform various types of work by using each work machine 14. FIG. 3 illustrates a case in which the work machine 14 is a cultivator.

The steering wheel 137 is an actuation unit to be actuated by a worker or the vehicle control device 11. For example, in the traveling device 13, an angle of the front wheels 132 is changed by an unillustrated hydraulic power steering mechanism or the like in response to an actuation of the steering wheel 137 by the vehicle control device 11, and a traveling direction of the work vehicle 10 is changed.

Further, the traveling device 13 includes, in addition to the steering wheel 137, an unillustrated shift lever, accelerator, brake, and the like to be actuated by the vehicle control device 11. Further, in the traveling device 13, a gear of the transmission 134 is switched to a forward gear, a backward gear, or the like in response to an actuation of the shift lever by the vehicle control device 11, and a traveling mode of the work vehicle 10 is switched to forward, backward, or the like. The vehicle control device 11 also controls a rotation speed of the engine 131 by actuating the accelerator. The vehicle control device 11 also actuates the brake, and brakes rotation of the front wheels 132 and the rear wheels 133 by using an electromagnetic brake.

The positioning unit 17 is communication equipment including a positioning control unit 171, a storage unit 172, a communication unit 173, a positioning antenna 174, and the like. For example, as illustrated in FIG. 2, the positioning unit 17 is provided on an upper portion of a cabin 138 in which a worker boards. Further, an installation location of the positioning unit 17 is not limited to the cabin 138. Furthermore, the positioning control unit 171, the storage unit 172, the communication unit 173, and the positioning antenna 174 of the positioning unit 17 may be disposed in a distributed manner at different positions in the work vehicle 10. Note that, as described above, the battery is connected to the positioning unit 17, and the positioning unit 17 is operable also when the engine 131 is stopped. Also, for example, a mobile phone terminal, a smartphone, a tablet terminal, a quantum compass, or the like may be substituted as the positioning unit 17.

The positioning control unit 171 is a computer system including one or a plurality of processors, and a storage memory such as a non-volatile memory and a RAM. The storage unit 172 is a non-volatile memory or the like that stores a program for causing the positioning control unit 171 to perform positioning processing, and data such as positioning information and movement information. For example, the program is non-transitorily recorded in a computer-readable recording medium such as a CD, or a DVD, read by a predetermined reading device (not illustrated), and stored in the storage unit 172. Note that, the program may be downloaded from a server (not illustrated) to the positioning unit 17 via the communication network N1, and stored in the storage unit 172.

The communication unit 173 is a communication interface that connects the positioning unit 17 to the communication network N1 in a wired or wireless manner, and performs data communication in accordance with a predetermined communication protocol with external equipment such as a base station server via the communication network N1.

The positioning antenna 174 is an antenna that receives radio waves (GNSS signals) to be transmitted from satellites.

The positioning control unit 171 computes a current position of the work vehicle 10, based on a GNSS signal to be received from a satellite by the positioning antenna 174. For example, in a case where the work vehicle 10 automatically travels inside a field, and the positioning antenna 174 receives a radio wave (such as a transmission time, and orbit information) to be transmitted from each of a plurality of satellites, the positioning control unit 171 computes a distance between the positioning antenna 174 and each satellite, and computes a current position (a latitude and a longitude) of the work vehicle 10, based on the computed distance. The positioning control unit 171 also computes a current position of the work vehicle 10 by utilizing correction information associated with a base station (reference station) near the work vehicle 10. Positioning by a real-time kinematic method (RTK-GPS positioning method (RTK method)) may also be performed. In this way, the work vehicle 10 performs automatic traveling by utilizing positioning information by the RTK method. Note that, a current position of the work vehicle 10 may be the same position as the positioning position (e.g., a position of the positioning antenna 174), or may be a position deviated from the positioning position. Note that the positioning control unit 171 may compute (position) a current position of the work vehicle 10 by utilizing a quantum compass.

When detecting a detection target during automatic traveling of the work vehicle 10, the obstacle detection device 15 outputs detection information (measurement information) to the vehicle control device 11. Specifically, the obstacle detection device 15 includes a detection control unit 51, a storage unit 52, the camera 53, an obstacle sensor 54, a communication unit 55, and the like. The obstacle detection device 15 may be configured as a single unit and loaded in the work vehicle 10, or a plurality of constituent elements may be disposed in the work vehicle 10 in a distributive manner.

The communication unit 55 is a communication interface that connects the obstacle detection device 15 to the communication network N1, N2 in a wired or wireless manner, and performs data communication in accordance with a predetermined communication protocol with external equipment (the far-field operation terminal 20, the near-field operation terminal 30, or the like) via the communication network N1, N2.

The storage unit 52 is a non-volatile storage unit such as an HDD or an SSD that stores various pieces of information. The storage unit 52 stores a control program for causing the obstacle detection device 15 to perform predetermined processing. For example, the control program is non-transitorily recorded in a computer-readable recording medium such as a CD, or a DVD, read by a predetermined reading device (not illustrated), and stored in the storage unit 52. Note that, the control program may be downloaded from a server (not illustrated) to the obstacle detection device 15 via the communication network N1, and stored in the storage unit 52.

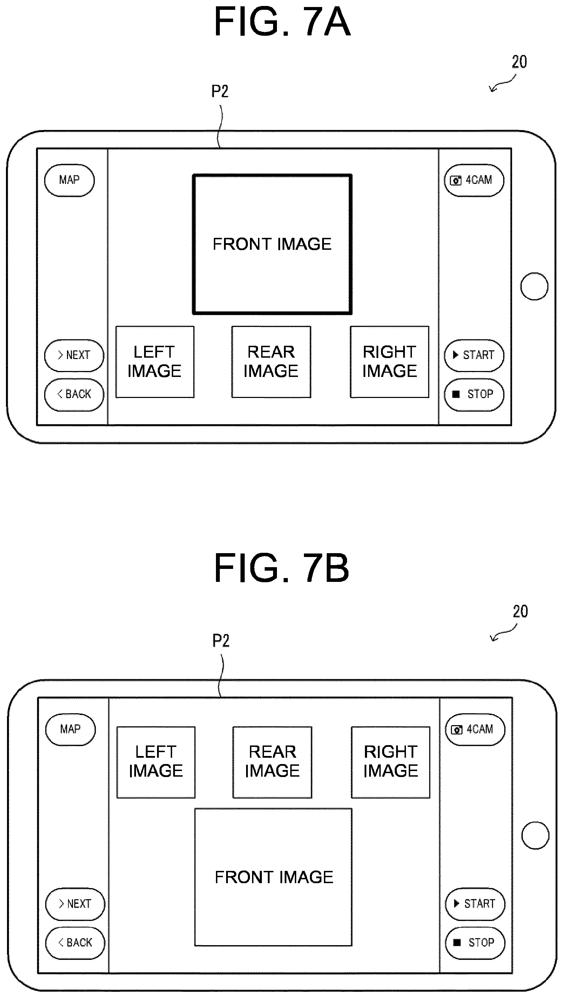

The camera 53 is a digital camera that captures an image of a subject included in a predetermined imaging range, and outputs the image, as digital image data. The camera 53 continuously captures a subject at a predetermined frame rate, generates frame images (photographed images) of a predetermined resolution, and sequentially transmits the frame images to the detection control unit 51. Further, the camera 53 transmits image data on the captured images to the far-field operation terminal 20 via the communication unit 55. The far-field operation terminal 20 can display the photographed images on an operation screen of the operation display unit 23 (see FIG. 7A and the like).

The camera 53 includes a front camera 53a capable of capturing an imaging range at a front position when viewed from the work vehicle 10, a rear camera 53b capable of capturing an imaging range at a rear position when viewed from the work vehicle 10, a left camera 53c capable of capturing an imaging range on a left side when viewed from the work vehicle 10, and a right camera (not illustrated) capable of capturing an imaging range on a right side when viewed from the work vehicle 10. As illustrated in FIG. 3, the front camera 53a is disposed on a front side of an upper portion of the cabin 138, the rear camera 53b is disposed on a rear side of the upper portion of the cabin 138, the left camera 53c is disposed on a left side of the upper portion of the cabin 138, and the right camera is disposed on a right side of the upper portion of the cabin 138. Note that, the camera 53 may be constituted of only the front camera 53a and the rear camera 53b. Further, the camera 53 may be constituted of one camera, and may be an omnidirectional camera capable of photographing all directions of the surroundings of the work vehicle 10.

The obstacle sensor 54 is a sensor that detects a detection target in a predetermined detection range by utilizing an infrared ray, an ultrasonic wave, or the like. For example, the obstacle sensor 54 may be a LIDAR sensor (distance sensor) capable of measuring a distance to a detection target in a three-dimensional manner by using a laser, or may be a sonar sensor including a plurality of sonars capable of measuring a distance to a detection target by using an ultrasonic wave. The obstacle sensor 54 is installed on a front middle portion, a rear middle portion, or the like of a vehicle body of the work vehicle 10, and detects an obstacle by monitoring the surroundings of the work vehicle 10. In the present embodiment, a case is described as an example, in which the obstacle sensor 54 includes a front obstacle sensor 54a capable of detecting a detection target in a detection range at the front and sides (left and right) when viewed from the work vehicle 10, and a rear obstacle sensor 54b capable of detecting a detection target in a detection range at the rear and sides (left and right) when viewed from the work vehicle 10. As illustrated in FIG. 3, the front obstacle sensor 54a is disposed on a front side of the upper portion of the cabin 138, and the rear obstacle sensor 54b is disposed on a rear side of the upper portion of the cabin 138. The front obstacle sensor 54a and the rear obstacle sensor 54b can detect a detection target in a 360-degree detection range of the surroundings of the work vehicle 10. The front camera 53a and the front obstacle sensor 54a may be constituted as one unit, and the rear camera 53b and the rear obstacle sensor 54b may be constituted as one unit. Note that, the obstacle sensor 54 may include a left obstacle sensor capable of detecting a detection target in a detection range on the left side when viewed from the work vehicle 10, and a right obstacle sensor capable of detecting a detection target in a detection range on the right side when viewed from the work vehicle 10.

The obstacle sensor 54 performs measurement of a distance to each distance measurement point (measurement target) being present in a measurement range by using, for example, a laser (near infrared laser light, or the like), generation of a distance image, based on measurement information, and the like. The obstacle sensor 54 includes a processing unit configured of an electronic control unit in which microcontrollers and the like are integrated, various control programs, and the like, and is connected to the detection control unit 51, the vehicle control device 11, and the like via a CAN to be mutually communicable.

The obstacle sensor 54 measures a distance from the obstacle sensor 54 to a distance measurement point in a measurement range by a time of flight (TOF) method in which a distance to a distance measurement point is measured based on a round trip time of irradiated laser light to reach the distance measurement point, and then return from the distance measurement point. The obstacle sensor 54 performs three-dimensional measurement in a measurement range by vertically and horizontally scanning over the entirety of the measurement range at a high speed with a laser, and sequentially measuring a distance to the distance measurement point for each scanning angle (coordinate). The obstacle sensor 54 sequentially measures an intensity (reflection intensity) of reflected light from each distance measurement point to be acquired when the entirety of the measurement range is scanned with a laser vertically and horizontally at a high speed. The obstacle sensor 54 repeatedly measures the distance to each distance measurement point in the measurement range, each reflection intensity, and the like in real-time.

The obstacle sensor 54 generates a distance image and extracts a distance measurement point group that is estimated to represent an obstacle from measurement information such as a measured distance to each distance measurement point, and a scanning angle (coordinate) with respect to each distance measurement point, and transmits, to the detection control unit 51, the measurement information related to the extracted distance measurement point group, as measurement information related to the obstacle.

Further, in the measurement range (detection range) of the obstacle sensor 54, a control range according to a distance from the work vehicle 10 is set. For example, in the measurement range, a range in which a distance from the work vehicle 10 is equal to or less than L1 is set as a stop control range, a range from the distance L1 to a distance L2 is set as a deceleration control range, and a range from the distance L2 to a distance L3 is set as a notification control range (where L1<L2<L3). Note that, each control range can be set according to a type, a model, a work content, a vehicle speed, and the like of the work vehicle 10. Further, the control range can be switched according to a traveling direction of the work vehicle 10. For example, the detection control unit 51 sets the control range on the front side of the vehicle body, in a case where the work vehicle 10 is traveling forward, and sets the control range on the rear side of the vehicle body, in a case where the work vehicle 10 is traveling backward.

The detection control unit 51 outputs, to the vehicle control device 11, measurement information to be acquired from the obstacle sensor 54. The detection control unit 51 sequentially outputs the measurement information to the vehicle control device 11, each time the detection control unit 51 acquires the measurement information from the obstacle sensor 54, while the work vehicle 10 is automatically traveling. As another embodiment, the detection control unit 51 may determine the type (such as a person, a vehicle, a structure, or materials) of a detection target (measurement target), based on captured images to be acquired from the camera 53, and measurement information to be acquired from the obstacle sensor 54, and output the determination result to the vehicle control device 11.

The vehicle control device 11 includes control equipment such as a CPU, a ROM, and a RAM. The CPU is a processor that executes various pieces of arithmetic processing. The ROM is a non-volatile storage unit that stores in advance a control program such as a BIOS and an OS for causing the CPU to execute various pieces of arithmetic processing. The RAM is a volatile or non-volatile storage unit that stores various pieces of information, and is used as a temporary storage memory in which the CPU executes various pieces of processing. Further, the vehicle control device 11 controls the work vehicle 10 by causing the CPU to execute various control programs stored in advance in the ROM or the storage unit 12.

Specifically, as illustrated in FIG. 1, the vehicle control device 11 includes various processing units such as a control processing unit 111. Note that, the vehicle control device 11 functions as the various processing units by causing the CPU to execute various pieces of processing according to the automatic traveling program. Also, some or all of the processing units may be configured of an electronic circuit. Note that, the automatic traveling program may be a program for causing a plurality of processors to function as the processing units.

The control processing unit 111 controls movement of the work vehicle 10. For example, in a case where a traveling mode of the work vehicle 10 is automatic traveling (automatic traveling mode), the control processing unit 111 causes the work vehicle 10 to automatically travel based on position information (positioning information) indicating a current position of the work vehicle 10 to be positioned by the positioning unit 17. For example, when the work vehicle 10 satisfies a start condition for automatic traveling, and acquires a traveling start instruction from an operator, the control processing unit 111 causes to start automatic traveling of the work vehicle 10, based on the positioning information. For example, the control processing unit 111 causes the work vehicle 10 to automatically travel according to a target route that is generated and set in advance from a traveling start position to a traveling finish position.

Further, when acquiring a stop instruction from the operator during automatic traveling of the work vehicle 10, the control processing unit 111 causes to stop the automatic traveling of the work vehicle 10.

Note that, in a case where the traveling mode of the work vehicle 10 is manual traveling (a manual traveling mode), it is possible to cause the work vehicle 10 to manually travel based on an operation (manual steering) by a worker. For example, the control processing unit 111 acquires operation information associated with a driving operation by a worker, such as a steering operation, a gear shifting operation, a traveling direction switching operation, and a braking operation, and causes the traveling device 13 to perform traveling movement, based on the operation information.

Further, in a case where an obstacle is detected during automatic traveling of the work vehicle 10, the control processing unit 111 causes the work vehicle 10 to perform predetermined handling processing. Specifically, in a case where the control processing unit 111 detects an obstacle in the notification control range, the control processing unit 111 causes the work vehicle 10 to output an alarm sound. Further, in a case where the control processing unit 111 detects an obstacle in the deceleration control range, the control processing unit 111 causes the work vehicle 10 during automatic traveling to decelerate from a vehicle speed that is set in advance. Further, in a case where the control processing unit 111 detects an obstacle in the stop control range, the control processing unit 111 causes the work vehicle 10 during automatic traveling to temporarily stop (stop). Note that, the control processing unit 111 may cause the work vehicle 10 to perform handling processing according to a type of a detection target detected by the obstacle detection device 15.

Further, the control processing unit 111 changes a vehicle speed of the work vehicle 10 during automatic traveling. For example, the control processing unit 111 increases a vehicle speed in response to an accelerating operation by an operator, and reduces a vehicle speed in response to a decelerating operation by the operator. Further, the control processing unit 111 changes an engine rotation speed of the work vehicle 10 during automatic traveling in response to an operation by the operator. Further, the control processing unit 111 raises or lowers the work machine 14 in response to an operation by the operator.

In this way, the control processing unit 111 controls movement of the work vehicle 10 in response to an operation by an operator.

Herein, the work vehicle 10 includes a near-field mode in which movement of the work vehicle 10 is controllable in the predetermined range AR, and a far-field mode in which movement of the work vehicle 10 is controllable (operable via cloud connection) via the communication network N1 (the Internet or the like), and the control processing unit 111 can set the near-field mode and the far-field mode, or switch between the near-field mode and the far-field mode. Note that, the near-field mode may be a mode in which movement of the work vehicle 10 is controllable by near-field communication, and the far-field mode may be a mode in which movement of the work vehicle 10 is controllable by far-field communication. Further, the near-field mode may be a remote control mode, and the far-field mode may be a smartphone mode. Further, the control processing unit 111 can control movement of the work vehicle 10 according to a set mode. Specific examples of movement control according to the mode are described later.

### [Far-field Operation Terminal 20]

As illustrated in FIG. 1, the far-field operation terminal 20 is an information processing device including an operation control unit 21, a storage unit 22, the operation display unit 23, a communication unit 24, and the like. For example, the far-field operation terminal 20 is constituted of a mobile terminal such as a smartphone, or a tablet terminal. Note that, the far-field operation terminal 20 may be an installation type (desktop type) personal computer.

The communication unit 24 is a communication interface that connects the far-field operation terminal 20 to the communication network N1 in a wired or wireless manner, and performs data communication in accordance with a predetermined communication protocol with external equipment such as one or a plurality of work vehicles 10 via the communication network N1.

The operation display unit 23 is a user interface including a display unit that displays various pieces of information, such as a liquid crystal display or an organic EL display, and an operation unit that accepts an operation, such as a touch panel, a mouse, or a keyboard. A map of a predetermined area including a field as a work target, predetermined information related to the work vehicle 10, and the like are displayed on the display unit. The predetermined information includes at least one of information related to a current surrounding environment of the work vehicle 10, information related to a current traveling status of the work vehicle 10, and information related to a current work status of the work vehicle 10. An operator (monitoring person) can recognize, at a place away from the work vehicle 10, a traveling state of the work vehicle 10 that automatically travels inside a field on a road, or the like, a detection result of an obstacle, and the like by the predetermined information to be displayed on the far-field operation terminal 20. That is, a monitoring person can remotely monitor the work vehicle 10 by using the far-field operation terminal 20.

Further, the display unit displays an operation screen on which a traveling start instruction, a traveling stop instruction, a traveling resume instruction, and the like with respect to the work vehicle 10 are performed. Further, the display unit displays a registration screen on which work vehicle information, field information, work information, and the like are registered.

The storage unit 22 is a non-volatile storage unit that stores various pieces of information, such as an HDD, an SSD, or a flash memory. The storage unit 22 stores a control program such as a control program for causing the operation control unit 21 to perform various pieces of processing. For example, the control program is non-transitorily recorded in a computer-readable recording medium such as a CD, or a DVD, read by a predetermined reading device (not illustrated), and stored in the storage unit 22. Note that, the control program may be downloaded from a server (not illustrated) to the far-field operation terminal 20 via the communication network N1, and stored in the storage unit 22.

In addition, the storage unit 22 stores data such as work vehicle information being information related to the work vehicle 10, target route information being information related to a target route, and the like. The work vehicle information includes information such as a vehicle number and a model number for each work vehicle 10. The vehicle number is identification information of the work vehicle 10. The model number is a model number of the work vehicle 10. Note that, the storage unit 22 may store the work vehicle information related to one work vehicle 10, or may store the work vehicle information related to a plurality of work vehicles 10. In the present embodiment, the storage unit 22 stores the work vehicle information related to each of the two work vehicles 10a and 10b.

The target route information includes information such as a route name, a field name, an address, a field area, and a work time for each target route. The route name is a route name of a target route. The field name is a name of a field as a work target, for which the target route is set. The address is an address of the field, and the field area is an area of the field. The work time is a time required for work in the field by the work vehicle 10.

In a case where the target route is a route (an intra-field route) associated with a road, the target route information includes information such as a route name, an address, a traveling distance, and a traveling time. The route name is a name of the road, and the address is an address of the road. The traveling distance is a distance by which the work vehicle 10 travels on the road, and is, for example, a distance from the first field to the second field. The traveling time is a time during which the work vehicle 10 travels on the road, and is, for example, a time required to move from the first field to the second field.

Note that, the storage unit 22 may store the target route information related to one target route, or may store the target route information related to a plurality of target routes. For example, in a case where an operator generates a plurality of target routes with respect to one or a plurality of fields to be managed by himself/herself, the storage unit 22 stores the target route information related to each target route. Note that, one target route may be set, or a plurality of target routes may be set for one field. Further, one inter-field route may be set, or a plurality of inter-field routes may be set for a pair of fields. In the present embodiment, the storage unit 22 stores target route information associated with a target route along which the work vehicle 10a travels inside the first field, and target route information associated with a target route along which the work vehicle 10b travels inside the second field.

As another embodiment, a part or all of pieces of information such as the work vehicle information and the target route information may be stored in a server accessible from the far-field operation terminal 20. An operator may perform an operation of registering the work vehicle information and the target route information in the server (e.g., a personal computer, a cloud server, or the like). In this case, the operation control unit 21 may acquire the information from the server, and perform each piece of processing.

The operation control unit 21 includes control equipment such as a CPU, a ROM, and a RAM. The CPU is a processor that executes various pieces of arithmetic processing. The ROM is a non-volatile storage unit that stores in advance a control program such as a BIOS and an OS for causing the CPU to execute various pieces of arithmetic processing. The RAM is a volatile or non-volatile storage unit that stores various pieces of information, and is used as a transitory storage memory (work area) in which the CPU executes various pieces of processing. Further, the operation control unit 21 controls the far-field operation terminal 20 by causing the CPU to execute various control programs stored in advance in the ROM or the storage unit 22.

As illustrated in FIG. 1, the operation control unit 21 includes various processing units such as a setting processing unit 211, a display processing unit 212, and an acceptance processing unit 213. Note that, the operation control unit 21 functions as the various processing units by causing the CPU to execute various pieces of processing in accordance with the control program. Also, some or all of the processing units may be configured of an electronic circuit. Note that, the control program may be a program for causing a plurality of processors to function as the processing units.

The setting processing unit 211 sets information (hereinafter, referred to as work vehicle information) related to the work vehicle 10, information (hereinafter, referred to as field information) related to a field, and information (hereinafter, referred to as work information) related to details of how work is performed.

Specifically, the setting processing unit 211 sets information by allowing an operator to perform an operation of registering, in the far-field operation terminal 20, the information such as a model of the work vehicle 10, a position at which the positioning antenna 174 is mounted in the work vehicle 10, a type of the work machine 14, a size and a shape of the work machine 14, a position of the work machine 14 with respect to the work vehicle 10, a vehicle speed and an engine rotation speed of the work vehicle 10 during work, and a vehicle speed and an engine rotation speed of the work vehicle 10 during turning.

Further, the setting processing unit 211 sets information by performing an operation of registering, in the far-field operation terminal 20, the information such as a position and a shape of the field, a work start position (a traveling start position) at which the work is started, a work finish position (a traveling finish position) at which the work is finished, and a work direction.

Information on a position and a shape of the field can be automatically acquired, for example, by allowing an operator to board in the work vehicle 10, and drive the work vehicle 10 in such a way as to travel along an outer periphery of the field once, and recording a transition in position information of the positioning antenna 174 at the time. Further, a position and a shape of the field can also be acquired by allowing a worker to operate the far-field operation terminal 20 in a state that a map is displayed on the far-field operation terminal 20, and based on a polygonal shape acquired by determining a plurality of points on the map.

Further, the setting processing unit 211 is also configured to be able to set, as work information, presence or absence of cooperative work between a work vehicle 10 (an unmanned tractor) and a manned work vehicle 10, a skip count being the number of work routes to be skipped in a case where the work vehicle 10 turns on a headland, a width of the headland, a width of non-cultivated land, and the like.

The setting processing unit 211 also generates a target route along which the work vehicle 10 is caused to automatically travel inside the field, based on each piece of the setting information. Specifically, the setting processing unit 211 generates a target route inside the field, based on a traveling start position and a traveling finish position registered in field settings. For example, the setting processing unit 211 generates a target route including a traveling start position, a traveling finish position, a straight forward route, and a turning route, based on a setting operation by an operator. The setting processing unit 211 registers the generated target route in association with the field. Further, the setting processing unit 211 outputs, to the work vehicle 10, route data on the target route.

The display processing unit 212 causes the operation display unit 23 to display various pieces of information. Specifically, the display processing unit 212 causes to display a map screen P1, on which an operator can select the work vehicle 10 that is registered in advance. For example, in a case where a monitoring person registers the work vehicle 10a and the work vehicle 10b being a monitoring target (management target), the display processing unit 212 causes to display, on the map screen P1, the work vehicle 10a and the work vehicle 10b to be selectable. The work vehicle 10 to be displayed on the map screen P1 may be a work vehicle 10 whose information is registered in the far-field operation terminal 20, or may be a work vehicle 10 selected by a monitoring person from among a plurality of registered work vehicles 10, in which work is to be started from now on.

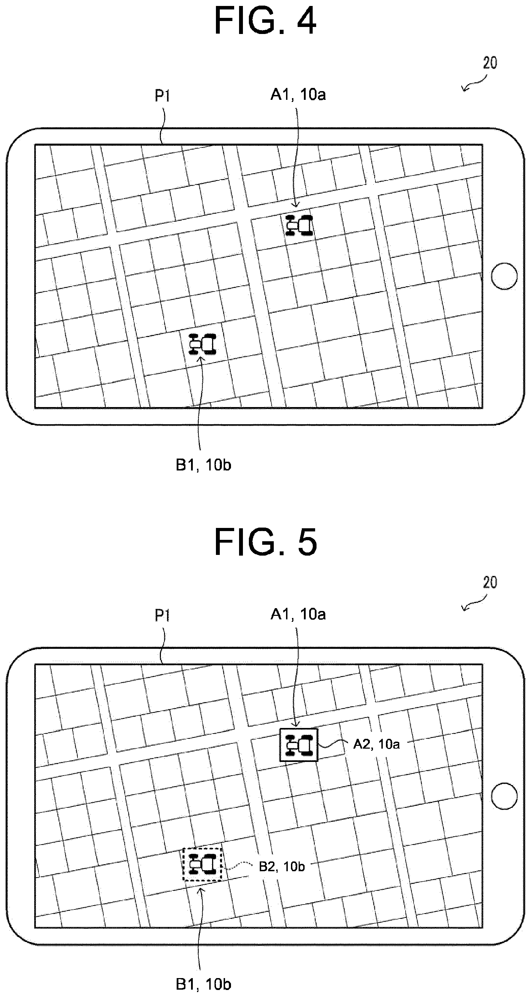

FIG. 4 illustrates an example of the map screen P1. As illustrated in FIG. 4, the display processing unit 212 causes to display, on the map screen P1, a map of a predetermined area including a current position of each of the work vehicle 10a and the work vehicle 10b that are registered in advance. Further, the display processing unit 212 causes to display, on the map, identification information of the work vehicle 10 at a position associated with a current position of the work vehicle 10. Specifically, as illustrated FIG. 4, the display processing unit 212 causes to display, on the map, an icon image A1 of the work vehicle 10a at a position associated with a current position of the work vehicle 10a, and an icon image B1 of the work vehicle 10b at a position associated with a current position of the work vehicle 10b. The display processing unit 212 acquires position information (positioning information) from the work vehicle 10, and causes to display, on the map, an icon image of the work vehicle 10. The display processing unit 212 updates the position of the icon image on the map in real-time. As another embodiment, the display processing unit 212 may cause to display, on the map, the name (text information) of the work vehicle 10a, instead of an icon image.

Further, the display processing unit 212 may cause to display the icon image A1 of the work vehicle 10a, and the icon image B1 of the work vehicle 10b to be identifiable. For example, the display processing unit 212 may cause to display the name of the work vehicle 10a in the vicinity of the icon image A1, and display the name of the work vehicle 10b in the vicinity of the icon image B1. Further, the display processing unit 212 may cause to display identification information (the name or the like) of the work vehicle 10a, in a case where a monitoring person performs a touch operation or a mouseover operation of the icon image A1, and may cause to display identification information (the name or the like) of the work vehicle 10b, in a case where the monitoring person performs a touch operation or a mouseover operation of the icon image B1.

Further, the display processing unit 212 may cause to display, on the map screen P1, the map in enlargement display or reduction display in response to an operation of enlarging or reducing the map. Further, the display processing unit 212 may automatically adjust a display magnification according to a position of the work vehicle 10 as a monitoring target. For example, the display processing unit 212 determines a display magnification of the map in such a way that icon images of all of the work vehicles 10 as a monitoring target are included in one screen (in the same page).

According to the map screen P1 illustrated in FIG. 4, a monitoring person can recognize current positions of all of the work vehicles 10 as a monitoring target. Note that, the display processing unit 212 may also be configured to cause to display, on the map screen P1, a work vehicle 10 that is not performing work, and is stored in a storage location (a warehouse or the like), or may also be configured in such a way that a work vehicle 10 that is not performing work, and is stored in a storage location is not displayed on the map screen P1. Further, a monitoring person may be able to set whether to display a work vehicle 10 that is not performing work, and is stored in a storage location on the map screen P1.

Further, the display processing unit 212 causes to display, on the map, identification information in a display mode associated with a current state of the work vehicle 10. Specifically, the display processing unit 212 causes to display, on the map, an icon image indicating whether the work vehicle 10 is automatically traveling or has stopped in an identifiable manner. That is, the display processing unit 212 differentiates, on the map, a display mode in a case where the work vehicle 10 is automatically traveling, and a display mode in a case where the work vehicle 10 has stopped. In the example illustrated in FIG. 5, in a case where the work vehicle 10a has stopped, the display processing unit 212 causes to display the icon image A1 in a mode indicating that the work vehicle 10a has stopped. Further, in a case where the work vehicle 10b is automatically traveling, the display processing unit 212 causes to display the icon image B1 in a mode indicating that the work vehicle 10b is automatically traveling. Note that, the display mode may be a type, a color, a thickness or the like of a line of a frame image surrounding an icon image, or may be a color, a size, a display method (lighting or blinking) of an icon image, or the like. For example, as illustrated in FIG. 5, the display processing unit 212 causes to display a frame image A2 of the icon image A1, and a frame image B2 of the icon image B1 in display modes different from each other.

As another embodiment, the display processing unit 212 may hide a frame image, when the work vehicle 10 is automatically traveling in a normal manner, and cause to display a frame image when the work vehicle 10 has stopped automatic traveling.

Further, the display processing unit 212 may cause to display, in the vicinity of the icon image A1, a message (text information) indicating that the work vehicle 10 has stopped, and may cause to display, in the vicinity of the icon image B1, a message indicating that the work vehicle 10 is automatically traveling. Further, the display processing unit 212 may cause to display a message indicating that the work vehicle 10 has stopped, in a case where an operator performs a touch operation or a mouseover operation with respect to the icon image A1, and may cause to display a message indicating that the work vehicle 10 is automatically traveling, in a case where the operator performs a touch operation or a mouseover operation with respect to the icon image B1.

Note that, the work vehicle 10 stops automatic traveling, for example, in a case where an obstacle is detected, work is finished, a remaining amount of spraying material or fuel has fallen below a specified amount, an amount of harvested material has become equal to or greater than a specified amount, regeneration work of a diesel particulate filter (DPF) has become necessary, replenishment work of urea water has become necessary, or the like.

As another embodiment, the display processing unit 212 may cause to display, on the map screen P1, identification information capable of identifying that an obstacle is detected, in a case where the obstacle is detected. For example, in a case where the work vehicle 10a has detected an obstacle, the display processing unit 212 illuminates or flashes the icon image A1, or causes to display the frame image A2 of the icon image A1 in a predetermined color. Further, the display processing unit 212 may cause to display the icon image A1 or the frame image A2 in a display mode associated with a detection position (control range) in a case where the work vehicle 10a has detected an obstacle. For example, in a case where the work vehicle 10a has detected an obstacle in the notification control range, the display processing unit 212 causes to display the frame image A2 in green, in a case where the work vehicle 10a has detected an obstacle in the deceleration control range, the display processing unit 212 causes to display the frame image A2 in yellow, and in a case where the work vehicle 10a has detected an obstacle in the stop control range, the display processing unit 212 causes to display the frame image A2 in red.

Further, the display processing unit 212 may cause to display, on the map screen P1, identification information capable of identifying a work status. For example, in a case where the work vehicle 10a has finished work inside a field as a work target, the display processing unit 212 illuminates or flashes the icon image A1, or causes to display the frame image A2 of the icon image A1 in a predetermined color. Further, for example, in a case where the work vehicle 10a is a vehicle (a spraying machine) that sprays a spraying material (chemical solution, water, and the like), in a case where a remaining amount of spraying material in the work vehicle 10a has fallen below a specified amount, or in a case where replenishing timing of spraying material has arrived, the display processing unit 212 illuminates or flashes the icon image A1, or causes to display the frame image A2 of the icon image A1 in a predetermined color. Further, for example, in a case where the work vehicle 10a is a vehicle (a combine harvester or the like) that harvests a harvested material, in a case where an amount of harvested material has become equal to or greater than a specified amount, or in a case where discharge timing of harvested material has arrived, the display processing unit 212 illuminates or flashes the icon image A1, or causes to display the frame image A2 of the icon image A1 in a predetermined color.

In this way, in a case where the work vehicle 10 has stopped automatic traveling, the display processing unit 212 may cause to display, on the map screen P1, the stopped state of the work vehicle 10 in an identifiable manner, and in a case where the work vehicle 10 has stopped automatic traveling, the display processing unit 212 may cause to display, on the map screen P1, identification information capable of specifying a cause of stoppage of the work vehicle 10.

According to the map screen P1 illustrated in FIG. 5, a monitoring person can recognize a current state for each work vehicle 10 as a monitoring target.

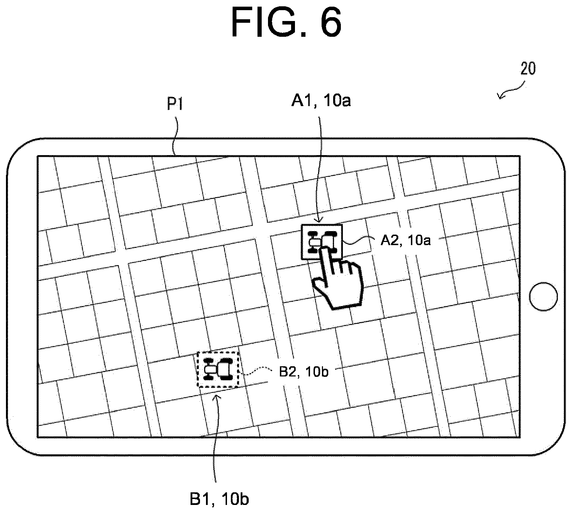

Herein, the display processing unit 212 causes to display, on the map screen P1 (see FIGS. 4 and 5), the work vehicle 10 to be selectable. Specifically, the display processing unit 212 causes to display, on a map of the map screen P1, the icon images A1 and B1 to be selectable. The acceptance processing unit 213 accepts, on the map screen P1, an operation of selecting an icon image by an operator. For example, as illustrated in FIG. 6, in a case where a monitoring person touches, with his/her finger, the icon image A1 of the work vehicle 10a displayed on the map screen P1, the acceptance processing unit 213 accepts the touch operation. For example, when a monitoring person views the map screen P1, and recognizes that the work vehicle 10a has stopped automatic traveling, the monitoring person touches the icon image A1 of the work vehicle 10a to confirm a cause of stoppage.

The display processing unit 212 causes the operation display unit 23 to display predetermined information related to the work vehicle 10 selected by a monitoring person. Specifically, the display processing unit 212 causes to display the predetermined information on an operation screen P2. The predetermined information includes at least one of information related to a current surrounding environment of the work vehicle 10, information related to a current traveling status of the work vehicle 10, and information related to a current work status of the work vehicle 10. For example, in a case where a monitoring person has selected the icon image A1 of the work vehicle 10a (see FIG. 6), as illustrated in FIG. 7A, the display processing unit 212 causes to display, on the operation screen P2, a captured image of the surroundings of the work vehicle 10a that is captured by the camera 53 loaded in the work vehicle 10a. Herein, the display processing unit 212 acquires a front image, a rear image, a left image, and a right image of the work vehicle 10a from the camera 53, and causes to display the images on the operation screen P2. Further, as illustrated in FIG. 7A, the display processing unit 212 causes to display the front image on an upper portion of the operation screen P2, and causes to display the rear image, the left image, and the right image on a lower portion of the operation screen P2. As another embodiment, as illustrated in FIG. 7B, the display processing unit 212 may cause to display the front image on a lower portion of the operation screen P2, and may cause to display the rear image, the left image, and the right image on an upper portion of the operation screen P2. Further, a layout, a size, and display/non-display of each image may be settable (customized) by an operator.

Further, in a case where the work vehicle 10a has detected an obstacle, the display processing unit 212 may cause to display, on the operation screen P2, a captured image including the obstacle from among a plurality of captured images of the camera 53 in an identifiable manner. For example, in a case where the obstacle sensor 54 of the work vehicle 10a has detected an obstacle in front of the work vehicle 10a, as illustrated in FIG. 7A, the display processing unit 212 causes to display, on the operation screen P2, a front image in an emphasized manner.

In this way, the display processing unit 212 causes to display, on a map of the map screen P1, an icon image of each of the plurality of preregistered work vehicles 10 in a display mode associated with a current state of the work vehicle 10 (see FIG. 6), and causes to display, on the operation screen P2, captured images of the surroundings of the work vehicle 10 that have been captured by the camera 53 loaded in the work vehicle 10 that is associated with an icon image selected by a monitoring person from among the plurality of icon images in the map screen P1(see FIG. 7A).

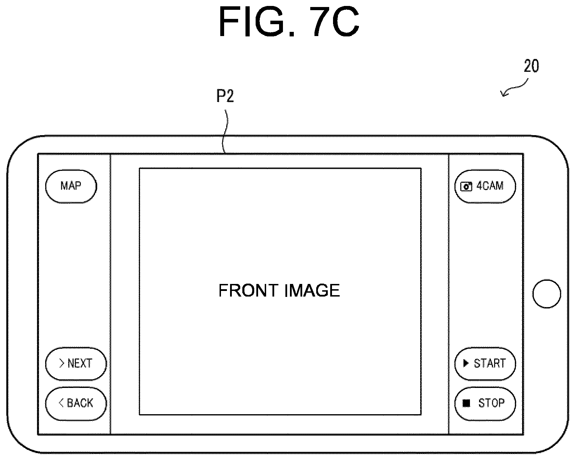

Further, the display processing unit 212 causes to display, on the operation screen P2, a switching button (a "NEXT" button, and a "BACK" button") with which a display image is switched. When a monitoring person presses the "NEXT" button once, the display processing unit 212 causes to enlarge and display the front image (see FIG. 7C). Subsequently, when the monitoring person presses the "NEXT" button once, the display processing unit 212 causes to enlarge and display the right image, and subsequently, when the monitoring person presses the "NEXT" button once, the display processing unit 212 causes to enlarge and display the rear image, and subsequently, when the monitoring person presses the "NEXT" button once, the display processing unit 212 causes to enlarge and display the left image. Each time a monitoring person presses the "NEXT" button, the display processing unit 212 switches the front image, the left image, the rear image, and the right image in this order. Further, when the monitoring person presses a "4CAM" button on the operation screen P2 illustrated in FIG. 7C, the display processing unit 212 causes to display, on the operation screen P2, captured images (a front image, a rear image, a left image, and a right image) in four directions (see FIG. 7A).

Note that, the display processing unit 212 may be able to change (zoom), on the operation screen P2 illustrated in FIGS. 7A to 7C, a display magnification (a field of view size) of a captured image. For example, in a case where a monitoring person performs an enlargement operation (a pinch-out operation) on the operation screen P2 illustrated in FIG. 7C, the display processing unit 212 enlarges and displays (zooms in) the front image, and in a case where the monitoring person performs a reduction operation (a pinch-in operation), the display processing unit 212 reduces and displays (zooms out) the front image. Further, the display processing unit 212 may change a capturing range (a photographing direction) of the camera 53 in response to an operation by a monitoring person.

In addition, the display processing unit 212 may cause to display, in a captured image, a detected obstacle in an emphasized manner by enclosing the detected obstacle in a frame image, or may track an obstacle. Further, the display processing unit 212 may cause to display, on the operation screen P2, distance information to a detected obstacle, and information on a type (a person, a vehicle, a structure, materials, and the like) of the obstacle. Note that, the camera 53 may be disposed in such a way that a part of the vehicle body of the work vehicle 10 is captured to make it easy to recognize a distance to a detected obstacle.

Further, the display processing unit 212 causes to display, on the operation screen P2, a "START" button and a "STOP" button. When a monitoring person presses the "START" button, the acceptance processing unit 213 accepts the operation, and outputs, to the work vehicle 10, an instruction to start or resume start of automatic traveling. For example, in a case where the work vehicle 10a has detected an obstacle, and stopped automatic traveling, a monitoring person selects the work vehicle 10a on the map screen P1 (see FIG. 6), and in a case where the monitoring person confirms safety of the work vehicle 10a on the operation screen P2, the monitoring person presses the "START" button. Then, the acceptance processing unit 213 outputs, to the work vehicle 10a, an instruction to resume automatic traveling, and the work vehicle 10a resumes automatic traveling in response to the instruction. As another embodiment, the acceptance processing unit 213 may permit an operation of pressing the "START" button on the condition that an obstacle is no longer detected.

Moreover, for example, when the monitoring person selects the work vehicle 10b on the map screen P1 during automatic traveling of the work vehicle 10b, and presses the "STOP" button on the operation screen P2, the acceptance processing unit 213 outputs, to the work vehicle 10b, an instruction to stop automatic traveling. Thus, the work vehicle 10b stops automatic traveling in response to the instruction.

Note that, when a monitoring person presses a "MAP" button on the operation screen P2, the display processing unit 212 switches to the map screen P1 (see FIG. 5). In this way, a monitoring person can alternately switch between the map screen P1 and the operation screen P2.

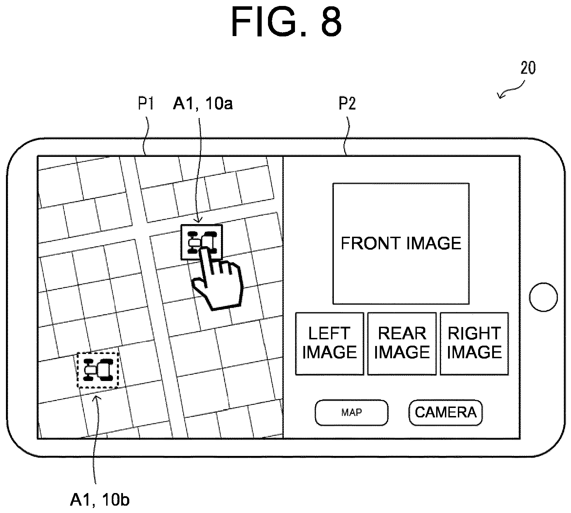

As another embodiment, the display processing unit 212 may cause to display the map screen P1 and the operation screen P2 side by side in the left-right direction or in the up-down direction. For example, as illustrated in FIG. 8, the display processing unit 212 causes to display the map screen P1 in a display area on the left side of the operation display unit 23, and causes to display, in a display area on the right side, the operation screen P2 associated with the work vehicle 10a selected on the map screen P1. Further, when a monitoring person presses a "MAP" button on the operation screen P2 illustrated in FIG. 8, the display processing unit 212 causes to enlarge and display the map screen P1 (see FIG. 6), and when the monitoring person presses a "CAMERA" button, the display processing unit 212 causes to enlarge and display the operation screen P2 (see FIG. 7A). Note that, the display processing unit 212 may cause to display a front image on a lower portion of the operation screen P2, and may cause to display a rear image, a left image, and a right image on an upper portion of the operation screen P2. Further, a layout, a size, and display/non-display of each image may be settable (customized) by a monitoring person.

The acceptance processing unit 213 can accept a movement instruction to control movement of the work vehicle 10, in addition to a start instruction and a stop instruction for automatic traveling. For example, the acceptance processing unit 213 accepts, from a monitoring person, a setting operation and a changing operation of a vehicle speed, an engine rotation speed, and the like of the work vehicle 10. For example, the display processing unit 212 causes to display, on the operation screen P2 (see FIG. 7A), the operation unit that accepts a setting operation and a changing operation of a vehicle speed and an engine rotation speed of the work vehicle 10. A monitoring person can perform a movement instruction to control movement of the work vehicle 10 in a state where a camera image can be confirmed. The operation control unit 21 outputs, to the work vehicle 10, the movement instruction accepted by the acceptance processing unit 213.

Note that, the setting processing in the setting processing unit 211 described above may be performed by the near-field operation terminal 30, an operation terminal (unillustrated) loaded in the work vehicle 10, or the like. Further, as described above, processing of starting automatic traveling in the operation control unit 21 can also be performed by the near-field operation terminal 30. For example, an operator (worker) present within the predetermined range AR of the field F can operate the near-field operation terminal 30, and perform a start instruction for automatic traveling, and the like.

Note that, the far-field operation terminal 20 may be accessible to a website (agricultural support site) of agricultural support services provided by a server (not illustrated) via the communication network N1. In this case, the far-field operation terminal 20 can function as an operation terminal for the server by causing the operation control unit 21 to execute a browser program. Further, the server includes each processing unit described above, and performs each piece of processing.

Herein, in a case where the mode is set to the far-field mode, the far-field operation terminal 20 may be configured to be able to control movement of the work vehicle 10. That is, the automatic traveling system 1 sets a movement content capable of controlling movement of the work vehicle 10 by the far-field operation terminal 20 depending on whether the mode to be set is the near-field mode or the far-field mode. Specific examples of movement control according to the mode are described later. Note that, the operation control unit 21 causes to display, on the map screen P1 and the operation screen P2, information capable of identifying that the current mode is the near-field mode or the far-field mode. For example, the operation control unit 21 causes to display, on the map screen P1, an icon image of the work vehicle 10 that is set to the near-field mode, and an icon image of the work vehicle 10 that is set to the far-field mode in a different color.

### [Near-field Operation Terminal 30]

The near-field operation terminal 30 is constituted of a mobile terminal such as a smartphone, a tablet terminal, or a remote controller. The near-field operation terminal 30 may have the same function as the far-field operation terminal 20. For example, the near-field operation terminal 30 is connected to the work vehicle 10 by Bluetooth within the predetermined range AR with respect to the work vehicle 10 as a reference.

The near-field operation terminal 30 may be able to accept a movement instruction to control movement of the work vehicle 10, in addition to a start instruction and a stop instruction for automatic traveling. For example, the near-field operation terminal 30 accepts, from a worker, a setting operation and a changing operation of a vehicle speed and an engine rotation speed of the work vehicle 10, a lifting operation of the work machine 14, a bank approach operation, and the like. For example, the near-field operation terminal 30 includes the operation unit that accepts a setting operation and a changing operation of a vehicle speed and an engine rotation speed of the work vehicle 10, a lifting operation of the work machine 14, and a bank approach operation. A worker can perform a movement instruction to control movement of the work vehicle 10 in a state where the worker can visually confirm the work vehicle 10 inside the field F. The near-field operation terminal 30 outputs, to the work vehicle 10, the movement instruction accepted from the worker.

Herein, in a case where the mode is set to the near-field mode, the near-field operation terminal 30 may be configured to permit a movement instruction to control movement of the work vehicle 10. That is, the automatic traveling system 1 sets a movement content capable of controlling movement of the work vehicle 10 by the near-field operation terminal 30, depending on whether the mode to be set is the near-field mode or the far-field mode. Specific examples of movement control according to the mode are described later.

As described above, the automatic traveling system 1 according to the present embodiment includes a configuration in which movement of the work vehicle 10 is controlled according to a set mode (the near-field mode or the far-field mode). Hereinafter, specific examples of movement control are described. Note that, the near-field operation terminal 30 may cause to display, on an operation screen of the near-field operation terminal 30, by means of a lamp, or the like, information capable of identifying whether the current mode is the near-field mode or the far-field mode. Further, the operation terminal (a terminal of the present machine) loaded in the work vehicle 10 may also display information capable of identifying whether the current mode is the near-field mode or the far-field mode.

### [Specific Example 1 of Movement Control]

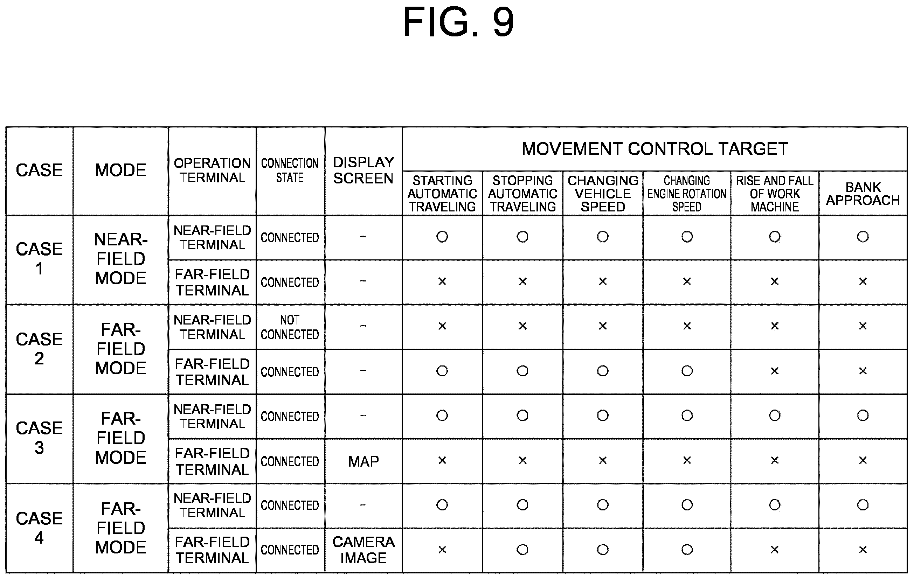

An example (case 1 illustrated in FIG. 9) of a case where the mode is set to the near-field mode, and the near-field operation terminal 30 is connected to the work vehicle 10 is described.

For example, in starting automatic traveling of the work vehicle 10, a worker boards in the work vehicle 10, turns on (starts) a key of the work vehicle 10, and activates an operation terminal (a terminal of the present machine) loaded in the work vehicle 10. At this occasion, the operation terminal sets the mode to the near-field mode of initial setting. Thus, the worker can operate the near-field operation terminal 30 within the predetermined range AR.

For example, when accepting a start instruction for automatic traveling from a worker, the near-field operation terminal 30 outputs the traveling start instruction to the work vehicle 10. When acquiring the traveling start instruction from the near-field operation terminal 30, the work vehicle 10 starts automatic traveling, in a case where a start condition for automatic traveling is satisfied.

Further, for example, when accepting a stop instruction for automatic traveling from a worker, the near-field operation terminal 30 outputs the traveling stop instruction to the work vehicle 10. When acquiring the traveling stop instruction from the near-field operation terminal 30, the work vehicle 10 stops automatic traveling.

Further, for example, when accepting a changing instruction for a vehicle speed in automatic traveling from a worker, the near-field operation terminal 30 outputs the vehicle speed changing instruction to the work vehicle 10. When acquiring the vehicle speed changing instruction from the near-field operation terminal 30, the work vehicle 10 changes the vehicle speed in automatic traveling.

Further, for example, when accepting a changing instruction for an engine rotation speed in automatic traveling from a worker, the near-field operation terminal 30 outputs the engine rotation speed changing instruction to the work vehicle 10. When acquiring the engine rotation speed changing instruction from the near-field operation terminal 30, the work vehicle 10 changes the engine rotation speed in automatic traveling.

Further, for example, when accepting a lifting instruction for the work machine 14 from a worker, the near-field operation terminal 30 outputs the lifting instruction to the work vehicle 10. When acquiring the lifting instruction from the near-field operation terminal 30, the work vehicle 10 raises or lowers the work machine 14.

Further, for example, when accepting a traveling instruction to cause the work vehicle 10 to approach a bank from a worker, the near-field operation terminal 30 outputs the traveling instruction to the work vehicle 10. The work vehicle 10 performs traveling (bank approach) in response to the traveling instruction to be acquired from the near-field operation terminal 30. The worker can operate, in the vicinity of the work vehicle 10, the near-field operation terminal 30, and cause the work vehicle 10 to travel in such a way as to approach a bank. Note that, the traveling instruction is not limited to bank approach, but may be any of various types of traveling instructions, such as forward movement, backward movement, or turning.

In this way, in a case where the mode is set to the near-field mode, and the near-field operation terminal 30 is connected to the work vehicle 10, the near-field operation terminal 30 is allowed to perform the each movement control for the work vehicle 10 (see "∘" in the "case 1" in FIG. 9).

In contrast, in a case where the mode is set to the near-field mode, allowing the far-field operation terminal 20 to perform the each movement control for the work vehicle 10 is restricted (see "×" in the "case 1" in FIG. 9). Specifically, in the far-field operation terminal 20, both in a case where a monitoring person is browsing the map screen P1 (see FIG. 4 and the like) on which a map is displayed, and a case where the monitoring person is browsing the operation screen P2 (see FIG. 7A and the like) on which a camera image is displayed, as far as the mode is set to the near-field mode, an operation by the near-field operation terminal 30 is prioritized, and movement control for the work vehicle 10 by the far-field operation terminal 20 is prohibited. Thus, it is possible to prevent that movement control of the work vehicle 10 by the far-field operation terminal 20 is performed in a state where movement control of the work vehicle 10 by the near-field operation terminal 30 is enabled.

For example, when the mode is set to the near-field mode, and a worker in the vicinity of the work vehicle 10 is trying to start automatic traveling, it is possible to prevent unexpected movement and lowering of safety, as exemplified by starting automatic traveling of the work vehicle 10 by a monitoring person at a remote place.

Further, in the specific example (case 1), for example, in a case where communication with the work vehicle 10 is cut off because the near-field operation terminal 30 is moved out of the predetermined range AR, or the like in a state that the near-field mode is set, the work vehicle 10 is caused to temporarily stop automatic traveling (see the "case 1" in FIG. 10). This is because, if the near-field operation terminal 30 is moved out of the predetermined range AR, stoppage of automatic traveling of the work vehicle 10 by the near-field operation terminal 30 is disabled at a time of emergency or the like, and because, in the near-field mode, stoppage of automatic traveling of the work vehicle 10 by the far-field operation terminal 20 is disabled. Note that, as another embodiment, in the near-field mode, a mode in which stoppage of automatic traveling of the work vehicle 10 by the far-field operation terminal 20 is enabled may be settable.

On the other hand, in a case where communication with the far-field operation terminal 20 is cut off in a state that the mode is set to the near-field mode, since an operation (such as a stopping operation) by the near-field operation terminal 30 is enabled, automatic traveling of the work vehicle 10 may be continued.

### [Specific Example 2 of Movement Control]

An example (case 2) in which the mode is set to the far-field mode, the near-field operation terminal 30 is not connected to the work vehicle 10, and the far-field operation terminal 20 is connected to the work vehicle 10 is described.

For example, a worker sets the mode to the far-field mode on an operation terminal (a terminal of the present machine) loaded in the work vehicle 10. Then, a monitoring person at a remote place can operate the far-field operation terminal 20. Further, in the far field mode, in a state where the near-field operation terminal 30 is not connected to the work vehicle 10, since a worker cannot perform a movement instruction by the near-field operation terminal 30, movement control by the far-field operation terminal 20 is permitted.

For example, when accepting a start instruction for automatic traveling from a monitoring person, the far-field operation terminal 20 outputs the traveling start instruction to the work vehicle 10. When acquiring the traveling start instruction from the far-field operation terminal 20, the work vehicle 10 starts automatic traveling in a case where a start condition for automatic traveling is satisfied.

Further, for example, when accepting a stop instruction for automatic traveling from a monitoring person, the far-field operation terminal 20 outputs the traveling stop instruction to the work vehicle 10. When acquiring the traveling stop instruction from the far-field operation terminal 20, the work vehicle 10 stops automatic traveling.

Further, for example, when accepting a changing instruction for a vehicle speed in automatic traveling from a monitoring person, the far-field operation terminal 20 outputs the vehicle speed changing instruction to the work vehicle 10. When acquiring the vehicle speed changing instruction from the far-field operation terminal 20, the work vehicle 10 changes the vehicle speed in automatic traveling.

Further, for example, when accepting a changing instruction for an engine rotation speed in automatic traveling from a monitoring person, the far-field operation terminal 20 outputs the engine rotation speed changing instruction to the work vehicle 10. When acquiring the engine rotation speed changing instruction from the far-field operation terminal 20, the work vehicle 10 changes the engine rotation speed in automatic traveling.

In contrast, since safety of the surroundings of the work vehicle 10 may be lowered, and a time lag occurs between operation instruction timing and movement timing, regard a lifting operation and a bank approach operation of the work machine 14, movement control is prohibited, and these operations are excluded from a movement control target of the far-field operation terminal 20 (see "×" in the "case 2" inf FIG. 9).

In this way, in a case where the mode is set to the far-field mode, the far-field operation terminal 20 is connected to the work vehicle 10, and the near-field operation terminal 30 is not connected to the work vehicle 10, in the far-field operation terminal 20, specific movement control for the work vehicle 10 can be performed (see "∘" in the "case 2" in FIG. 9).

Note that, since the near-field operation terminal 30 is not connected to the work vehicle 10, each movement control by the near-field operation terminal 30 is prohibited (see "×" in the "case 2" in FIG. 9).

Further, in the specific example 2 (case 2), for example, in a case where communication with the far-field operation terminal 20 is cut off, the work vehicle 10 is caused to temporarily stop automatic traveling (see the "case 2" in FIG. 10). Note that, as another embodiment, in a case where the near-field operation terminal 30 is connected to the work vehicle 10, since an operation of the near-field operation terminal 30 is enabled, even in a case where communication with the far-field operation terminal 20 is cut off, automatic traveling of the work vehicle 10 may be continued.

### [Specific Example 3 of Movement Control]

An example (case 3) of a case where the mode is set to the far-field mode, the near-field operation terminal 30 and the far-field operation terminal 20 are connected to the work vehicle 10, and the map screen P1 (see FIG. 4 and the like) is displayed on the far-field operation terminal 20 is described.

For example, in an operation terminal (a terminal of the present machine) loaded in the work vehicle 10, the mode is set to the far-field mode. Then, a monitoring person at a remote place can operate the far-field operation terminal 20. Further, in the far-field mode, in a state where the near-field operation terminal 30 is connected to the work vehicle 10, a worker is allowed to perform a movement instruction by the near-field operation terminal 30. Further, in a state where the map screen P1 is displayed on the far-field operation terminal 20, since it cannot be said that the monitoring person can recognize (monitor) the surroundings of the work vehicle 10, movement control by the far-field operation terminal 20 is prohibited.

That is, in the specific example (case 3), the same movement control as that in the specific example 1 (case 1) is performed (see FIG. 9). As another embodiment, in the case 3, only a stop instruction for automatic traveling by the far-field operation terminal 20 may be permitted. Further, in the specific example 3 (case 3), in a case where communication with at least either of the far-field operation terminal 20 and the near-field operation terminal 30 is cut off, the work vehicle 10 is caused to temporarily stop automatic traveling (see the "case 3" in FIG. 10). Note that, as another embodiment, in a case where communication with the far-field operation terminal 20 is cut off, automatic traveling of the work vehicle 10 may be continued.

### [Specific Example 4 of Movement Control]

An example (case 4) of a case where the mode is set to the far-field mode, the near-field operation terminal 30 and the far-field operation terminal 20 are connected to the work vehicle 10, and the operation screen P2 (see FIG. 7A and the like) is displayed on the far-field operation terminal 20 is described.

For example, a worker sets the mode to the far-field mode on the operation terminal (a terminal of the present machine) loaded in the work vehicle 10. Then, a monitoring person at a remote place can operate the far-field operation terminal 20. Further, in the far-field mode, in a state where the near-field operation terminal 30 is connected to the work vehicle 10, a worker is allowed to perform a movement instruction by the near-field operation terminal 30. Further, in a state where the operation screen P2 is displayed on the far-field operation terminal 20, since the monitoring person can recognize (monitor) the surroundings of the work vehicle 10 by a camera image, the monitoring person is also allowed to perform a movement instruction by the far-field operation terminal 20.

For example, similarly to the specific example (case 3), regarding movement control by the near-field operation terminal 30, each movement control is permitted (see "∘" in the "case 4" in FIG. 9). In contrast, movement control by the far-field operation terminal 20 is prohibited (see "×" in the "case 4" in FIG. 9), regarding start of automatic traveling, lifting of the work machine 14, and bank approach, which may lower safety of the surroundings of the work vehicle 10, and only stoppage of automatic traveling, and changing of a vehicle speed and an engine rotation speed, which may not lower safety of the surroundings of the work vehicle 10, are permitted.

As another embodiment of the specific example (case 4), starting and stopping of automatic traveling by the near-field operation terminal 30 may be prohibited, and starting and stopping of automatic traveling by the far-field operation terminal 20 may be permitted.

Also, in the specific example (case 4), since stoppage of automatic traveling can be performed by the far-field operation terminal 20, for example, in a case where communication with the near-field operation terminal 30 is cut off, automatic traveling of the work vehicle 10 may be continued (see the "case 4" in FIG. 10). Thus, for example, even in a case where a worker moves out of the predetermined range AR while carrying the near-field operation terminal 30, and communication with the work vehicle 10 is cut off, automatic traveling can be continued without stopping.

Further, in a case where communication with the far-field operation terminal 20 is cut off, automatic traveling of the work vehicle 10 is temporarily stopped. Note that, as another embodiment, in a case where the near-field operation terminal 30 is connected, automatic traveling of the work vehicle 10 may be continued, in a case where communication with the far-field operation terminal 20 is cut off.

In this way, in the cases 3 and 4, in a case where the mode is set to the far-field mode, the automatic traveling system 1 sets, to a first movement content, a movement content by which the near-field operation terminal 30 is capable of moving the work vehicle 10, and sets, to a second movement content being a part of the first movement content, a movement content by which the far-field operation terminal 20 is capable of moving the work vehicle 10. Further, the first movement content includes movement of starting automatic traveling of the work vehicle 10 and movement of stopping automatic traveling of the work vehicle 10, and the second movement content includes movement of stopping automatic traveling of the work vehicle 10, and does not include movement of starting automatic traveling of the work vehicle 10.

Further, in the cases 3 and 4, in a case where a display content of the far-field operation terminal 20 is the operation screen P2 including a camera image of the surroundings of the work vehicle 10, the automatic traveling system 1 sets, to the first movement content, a movement content by which the far-field operation terminal 20 is capable of moving the work vehicle 10, and in a case where the display content is the map screen P1 including a current position of the work vehicle 10, the automatic traveling system 1 does not set a movement content by which the far-field operation terminal 20 is capable of moving the work vehicle 10, or sets, to a movement content being a part of the first movement content, a movement content by which the far-field operation terminal 20 is capable of moving the work vehicle 10. Note that, the operation screen P2 is an example of a first screen of the present invention, and the map screen P1 is an example of a second screen of the present invention. The first screen of the present invention is not limited to a screen including a camera image, and may be any screen on which movement settings on the work vehicle 10 can be performed (a screen on which a movement setting operation can be accepted from an operator). Further, the second screen of the present invention is not limited to a map screen including a current position, and may be a screen (a state display screen for displaying a state of the work vehicle 10, or a screen capable of accepting an operation of setting a part of movement settings) on which at least a part of movement settings on the work vehicle 10 is restricted.

Further, the automatic traveling system 1 may set, to the first movement content, a movement content by which the far-field operation terminal 20 is capable of moving the work vehicle 10, in a case where a display content of the far-field operation terminal 20 is both of the first screen and the second screen, that is, as illustrated in FIG. 8, in a case where the map screen P1 and the operation screen P2 are displayed side by side.

As described in the specific examples 1 to 4 (cases 1 to 4), the automatic traveling system 1 sets, on each operation terminal, a movement content (movement control target) capable of controlling movement of the work vehicle 10, based on the set mode (the near-field mode or the far-field mode), and a connection state of an operation terminal (the near-field operation terminal 30, or the far-field operation terminal 20). Further, the automatic traveling system 1 sets a movement content capable of controlling movement of the work vehicle 10 on the far-field operation terminal 20, based on a display content (a map, or a camera image) being displayed on the far-field operation terminal 20. Further, the automatic traveling system 1 temporarily stops or continues automatic traveling of the work vehicle 10, based on the mode and each of the connection states.

Permission ("∘") and non-permission ("×") of each movement control target illustrated in FIG. 9 are registered in advance according to a registration operation by an operator, and can be changed as appropriate. Further, the operator can select any of the cases 1 to 4 on a setting screen (not illustrated), and can switch as appropriate. That is, the automatic traveling system 1 can register in advance a plurality of combinations (the cases 1 to 4 in FIG. 9) in which the mode (the near-field mode and the far-field mode), a movement content by which the near-field operation terminal 30 is capable of moving the work vehicle 10, and a movement content by which the far-field operation terminal 20 is capable of moving the work vehicle 10 are associated with one another, and accept an operator's operation of selecting from among the plurality of combinations. Further, for example, it is also possible to set to "enable" or "disable", regarding each of the cases 1 to 4. For example, in a case where the cases 1, 3, and 4 are set to "enable", and the cases 2 and 3 are set to "disable", the automatic traveling system 1 controls movement of the work vehicle 10, based on the movement content in the cases 1, 3, and 4.

Further, each movement control target illustrated in FIG. 9 is not limited to start of automatic traveling, stoppage of automatic traveling, changing of a vehicle speed, changing of an engine rotation speed, lifting of the work machine 14, and bank approach, and may include another movement control target.

The cases 1 to 4 are an example, and combination of permission and nonpermission of each movement control target may be the ones described below.

For example, in the case 4, in a case where the near-field operation terminal 30 is connected, regardless that the mode is set to the far-field mode, since automatic traveling by the far-field operation terminal 20 cannot be started, an operator (a worker, or a monitoring person) may feel incongruity. In view of this, for example, the near-field operation terminal 30 may be provided with a switching unit (e.g., a toggle switch) capable of switching between the near-field mode and the far-field mode. A worker switches the toggle switch to ON, in a case where the mode is set to the far-field mode. In this case, the automatic traveling system 1 sets the priority to the far-field mode, and permits a start instruction for automatic traveling by the far-field operation terminal 20. Further, regarding the near-field operation terminal 30, the automatic traveling system 1 permits only a stop instruction for automatic traveling, and prohibits a start instruction for automatic traveling, a changing instruction for a vehicle speed and an engine rotation speed, a lifting instruction for the work machine 14, and a bank approach instruction. Further, in this case, the automatic traveling system 1 may continue automatic traveling, in a case where communication with either of the far-field operation terminal 20 and the near-field operation terminal 30 is cut off, and may temporarily stop automatic traveling, in a case where communication with both of the far-field operation terminal 20 and the near-field operation terminal 30 are cut off.

Further, when the operator switches the toggle switch to OFF, the priority is set to the near-field mode. In this case, the automatic traveling system 1 permits each operation instruction by the near-field operation terminal 30, and permits only a stop instruction for automatic traveling by the far-field operation terminal 20.

As another embodiment, the switching unit capable of switching between the near-field mode and the far-field mode may be provided on a terminal of the present machine. For example, a worker may switch the priority to the far-field mode by the switching unit, when boarding in the work vehicle 10.

As another embodiment of each of the cases described above, the automatic traveling system 1 may switch the mode to the near-field mode, in a case where communication with the far-field operation terminal 20 is cut off in a state where the mode is set to the far-field mode. This enables each operation instruction by the near-field operation terminal 30. Note that, the automatic traveling system 1 may notify each operation terminal of information indicating that the mode is switched.

Further, the mode may be set to the near-field mode in initial setting. In this case, for example, the automatic traveling system 1 sets the mode to the near-field mode, each time in a case where work in a field is finished, and in a case where work is suspended. For example, in a case where work is suspended in a state of the far-field mode, the mode may be set to the near-field mode in resuming the work, and thereafter, the mode may be switched to the far-field mode after giving an instruction to resume the work.

### [Movement Control Processing]

Hereinafter, an example of movement control processing to be performed by the automatic traveling system 1 is described with reference to FIG. 11.

Note that, the present invention can be described as an invention directed to a movement control method (an example of a movement control method according to the present invention) in which one or more steps included in the movement control processing are performed. Further, one or more steps included in the movement control processing described herein may be omitted as appropriate. Note that, the order of execution of each step in the movement control processing may be different, as far as similar advantageous effects are generated. Furthermore, although a case is described herein as an example, in which the vehicle control device 11 performs each step in the movement control processing, a movement control method in which one or more processors perform each step in the movement control processing in a distributed manner is also considered as another embodiment.

In step S1, the vehicle control device 11 acquires setting information of the mode. Specifically, the vehicle control device 11 acquires, by a worker, identification information of the near-field mode or the far-field mode selected on an operation terminal (a terminal of the present machine) loaded in the work vehicle 10. As another embodiment, the vehicle control device 11 may acquire identification information of the near-field mode or the far-field mod selected on the near-field operation terminal 30 or the far-field operation terminal 20.

Next, in step S2, the vehicle control device 11 acquires a connection state of the operation terminal. Specifically, the vehicle control device 11 acquires a connection state (being connected or not connected) between the work vehicle 10 (communication unit 16) and the near-field operation terminal 30, and a connection state (being connected or not connected) between the work vehicle 10 (communication unit 16) and the far-field operation terminal 20. Note that, in a case where the far-field operation terminal 20 is connected to the work vehicle 10, the vehicle control device 11 outputs, to the far-field operation terminal 20, position information of the work vehicle 10, and captured image data of the camera 53. This allows the far-field operation terminal 20 to display the map screen P1 (see FIG. 4 and the like), and the operation screen P2 (see FIG. 7A and the like). Further, the near-field operation terminal 30 becomes connectable to the work vehicle 10, in a case where the near-field operation terminal 30 is located within the predetermined range AR with respect to the work vehicle 10.

Next, in step S3, the vehicle control device 11 determines whether a movement instruction is acquired. For example, a worker in the vicinity of the work vehicle 10 performs a movement instruction for the work vehicle 10 by the near-field operation terminal 30, and a monitoring person at a remote place from the work vehicle 10 performs a movement instruction for the work vehicle 10 by the far-field operation terminal 20. In a case where the vehicle control device 11 acquires a movement instruction (S3: Yes), the processing is proceeded to step S4. In a case where the vehicle control device 11 does not acquire a movement instruction (S3: No), the processing is proceeded to step S5.

In step S4, the vehicle control device 11 performs movement control processing. Specifically, the vehicle control device 11 performs movement control processing associated with the movement instruction, based on the mode (the near-field mode or the far-field mode), and a connection state of each operation terminal. For example, in a case where a movement control content is set to any of the cases 1 to 4 (see FIG. 9), the vehicle control device 11 performs movement control processing associated with a set case.

As one example, for example, in a case where the case 1 (near-field mode) and the case 4 (far-field mode) are selected (enabled), the vehicle control device 11 performs movement control of the case 1 in the near-field mode, and performs movement control of the case 4 in the far-field mode. For example, in a case where the mode is set to the near-field mode, a worker is allowed to perform, by the near-field operation terminal 30, a start instruction for automatic traveling, a stop instruction for automatic traveling, a changing instruction for a vehicle speed and an engine rotation speed, a lifting instruction for the work machine 14, and a bank approach instruction, and a monitoring person is prohibited from performing a movement instruction by the far-field operation terminal 20. Further, in a case where communication with the near-field operation terminal 30 is cut off, automatic traveling is temporarily stopped, regardless of a connected state of the far-field operation terminal 20. On the other hand, in a case where communication with the far-field operation terminal 20 is cut off, automatic traveling is continued on the condition that the near-field operation terminal 30 is connected.

Further, for example, in a case where the mode is set to the far-field mode, a worker can perform, by the near-field operation terminal 30, a start instruction for automatic traveling, a stop instruction for automatic traveling, a changing instruction for a vehicle speed and an engine rotation speed, a lifting instruction for the work machine 14, and a bank approach instruction, and a monitoring person can perform, by the far-field operation terminal 20, a stop instruction for automatic traveling, a changing instruction for a vehicle speed and an engine rotation speed, and a lifting instruction for the work machine 14. Further, in a case where communication with the near-field operation terminal 30 is cut off, automatic traveling is continued on the condition that the far-field operation terminal 20 is connected. On the other hand, in a case where communication with the far-field operation terminal 20 is cut off, automatic traveling is temporarily stopped, regardless of a connection state with the near-field operation terminal 30.

Note that, in the case 4, the vehicle control device 11 permits a movement instruction by the far-field operation terminal 20 on the condition that the operation screen P2 (see FIG. 7A and the like) is displayed on the far-field operation terminal 20. In contrast, in a case where the map screen P1 (see FIG. 4 and the like) is displayed on the far-field operation terminal 20, the vehicle control device 11 may prohibit a movement instruction by the far-field operation terminal 20 (equivalent to the case 3).

In step S5, the vehicle control device 11 determines whether a finishing operation is accepted from the operator. For example, in a case where the operator performs an operation of finishing automatic traveling of the work vehicle 10, an operation of finishing remote monitoring, or the like, the vehicle control device 11 accepts the finishing operation (S5: Yes), and terminates the movement control processing. In a case where the vehicle control device 11 does not accept the finishing operation from the operator (S5: No), the vehicle control device 11 returns the processing to step S1, and performs the above processing. The vehicle control device 11 repeatedly performs steps S1 to S4 until accepting the finishing operation from the operator. Further, the vehicle control device 11 updates, on the map screen P1 and the operation screen P2, a current position (map information) of the work vehicle 10, and a camera image in real-time until accepting the finishing operation from the operator. In this way, the vehicle control device 11 performs the vehicle control processing.

As described above, the automatic traveling system 1 according to the present embodiment controls movement of the work vehicle 10 by the near-field operation terminal 30 (first operation terminal) capable of moving the work vehicle 10 within the predetermined range AR with respect to the work vehicle 10, and the far-field operation terminal 20 (second operation terminal) capable of moving the work vehicle 10 via the communication network N1 (via cloud). Specifically, the automatic traveling system 1 sets either of the near-field mode (first mode) in which movement of the work vehicle 10 by the near-field operation terminal 30 is permitted, and the far-field mode (second mode) in which movement of the work vehicle 10 by the far-field operation terminal 20 is permitted, and sets a movement content (movement control target) capable of moving the work vehicle 10 by the near-field operation terminal 30, and a movement content by which the far-field operation terminal 20 is capable of moving the work vehicle 10, based on the set mode.

According to the above configuration, for example, in a case where the mode is set to the near-field mode, the work vehicle 10 is allowed to perform movement associated with the near-field mode by the near-field operation terminal 30. Further, for example, in a case where the mode is set to the far-field mode, the work vehicle 10 is allowed to perform movement associated with the far-field mode by the far-field operation terminal 20. That is, the work vehicle 10 is allowed to perform movement according to a set mode. Therefore, it is possible to appropriately control movement of the work vehicle 10, in a case where the near-field operation terminal 30 and the far-field operation terminal 20 are used together.

Further, the automatic traveling system 1 may set, in addition to setting information of the mode, the movement content, based on a connection state of each of the near-field operation terminal 30 and the far-field operation terminal 20. This allows the work vehicle 10 to perform movement suitable for a connection state of each of the near-field operation terminal 30 and the far-field operation terminal 20.

Furthermore, the automatic traveling system 1 may set, in addition to setting information of the mode and the connection state, the movement content, based on a display content (the map screen P1 or the operation screen P2) of the far-field operation terminal 20. This allows the work vehicle 10 to perform movement suitable for a display content of the far-field operation terminal 20.

As another embodiment, the automatic traveling system 1 may permit automatic traveling, in a case where an operator or the near-field operation terminal 30 is present within the predetermined range AR with respect to the work vehicle 10, and may prohibit automatic traveling, in a case where the operator or the near-field operation terminal 30 is not present within the predetermined range AR. Note that, the predetermined range AR is a range of a distance within which the near-field operation terminal 30 and the work vehicle 10 can make a pairing. Further, in the near-field mode, the near-field operation terminal 30 and the work vehicle 10 may directly communicate with each other. Further, in a case where the near-field operation terminal 30 is located within the predetermined range AR, the near-field operation terminal 30 and the work vehicle 10 may communicate with each other via a server. Further, in the far-field mode, the far-field operation terminal 20 and the work vehicle 10 communicate with each other via a server. Further, the automatic traveling system 1 may determine a position of an operator by a camera image, or may determine a position of an operator by position information of a communication terminal (a smartphone or the like) carried by the operator.

Further, the automatic traveling system 1 may automatically set the near-field mode or the far-field mode according to a connection state between the work vehicle 10 and each operation terminal. For example, in a case where the near-field operation terminal 30 or a worker is located within the predetermined range AR with respect to the work vehicle 10, the automatic traveling system 1 sets the mode to the near-field mode, in a case where the near-field operation terminal 30 and the work vehicle 10 are connected to each other. Note that, in a case where a pairing is made on the side of the near-field operation terminal 30, the automatic traveling system 1 may automatically switch the mode to the near-field mode. The automatic traveling system 1 may switch the mode to the near-field mode according to an operation of a pairing button, or may automatically switch the mode to the near-field mode without depending on an operation of the pairing button.

Further, for example, in a case where the far-field operation terminal 20 and the work vehicle 10 are connected to each other, the automatic traveling system 1 may set the mode to the far-field mode. Note that, in a case where the far-field operation terminal 20 is set in such a way that notification by a remote monitoring application is not allowed, the automatic traveling system 1 may be configured not to set the mode to the far-field mode. In this case, the automatic traveling system 1 may notify the far-field operation terminal 20 that setting to the far-field mode is disabled.

As another embodiment, the automatic traveling system 1 may be able to switch the mode in response to a request from each operation terminal. For example, in a case where the mode is set to the near-field mode, when a monitoring person requests to switch to the far-field mode on the far-field operation terminal 20, the near-field operation terminal 30 notifies a worker of an inquiry as to whether to permit or refuse the switching request. When the worker permits, the automatic traveling system 1 switches the mode to the far-field mode. Likewise, for example, in a case where the mode is set to the far-field mode, when a worker requests to switch to the near-field mode on the near-field operation terminal 30, the far-field operation terminal 20 notifies the monitoring person of an inquiry as to whether to permit or refuse the switching request. When the monitoring person permits, the automatic traveling system 1 switches the mode to the near-field mode.

As another embodiment, the automatic traveling system 1 may permit switching from the far-field mode to the near-field mode both in a case where the work vehicle 10 is automatically traveling, and in a case where the work vehicle 10 is stopped, and may permit switching from the near-field mode to the far-field mode only when the work vehicle 10 is stopped. Further, the automatic traveling system 1 may permit switching from the near-field mode to the far-field mode during automatic traveling of the work vehicle 10 on the condition that a worker permits. Further, the automatic traveling system 1 may be able to set as to whether switching to the far-field mode is allowed only when the work vehicle 10 is stopped, or also when the work vehicle 10 is automatically traveling, in response to an operation by an operator.

Further, in a case where a monitoring person requests to switch to the far-field mode, the automatic traveling system 1 may temporarily stop the work vehicle 10, and in a case where the request is not permitted by a worker within a predetermined time, the automatic traveling system 1 may resume automatic traveling in a state of the near-field mode.

As another embodiment, in a case where the work vehicle 10 is stopped, the automatic traveling system 1 may be able to perform a movement instruction for the work vehicle 10 from both of the near-field operation terminal 30 and the far-field operation terminal 20 regardless of a set mode.

Further, as another embodiment, in a case where temporary stoppage of the work vehicle 10 is instructed from the near-field operation terminal 30, the automatic traveling system 1 may prohibit an instruction for resuming automatic traveling from the far-field operation terminal 20, and may permit an instruction for resuming automatic traveling of the work vehicle 10 only from the near-field operation terminal 30.

Further, as another embodiment, the automatic traveling system 1 may cause to display from which operation terminal, automatic traveling can be started in an identifiable manner. For example, the automatic traveling system 1 causes to display, on a display screen of an operation terminal, identification information of an operation terminal with which automatic traveling can be started. Further, for example, the automatic traveling system 1 may turn on a display light (a lamp, an LED, or the like) of an operation terminal, with which automatic traveling can be started, in an identifiable manner.

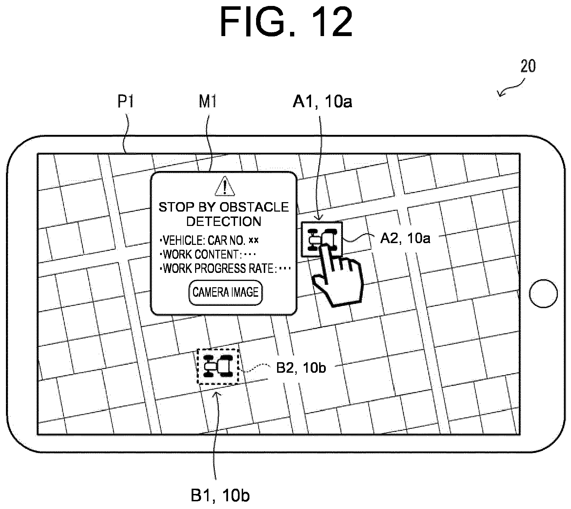

Further, as another embodiment, for example, in a case where the work vehicle 10 has detected an obstacle in a case where the mode is set to the near-field mode, the automatic traveling system 1 may switch the near-field mode to the far-field mode. For example, when acquiring detection information on an obstacle, as illustrated in FIG. 12, the far-field operation terminal 20 causes to display, on the map screen P1, a message M1 indicating that the obstacle has been detected in a popup manner. Then, the automatic traveling system 1 switches the near-field mode to the far-field mode, and permits a movement instruction on the far-field operation terminal 20. For example, when a monitoring person presses a camera image button on the map screen P1 illustrated in FIG. 12, the far-field operation terminal 20 displays the operation screen P2 (see FIG. 7A and the like). In a case where the monitoring person gives an instruction for resuming automatic traveling on the operation screen P2, the automatic traveling system 1 resumes automatic traveling of the work vehicle 10.

Further, as another embodiment, the automatic traveling system 1 may be able to connect one work vehicle 10 to a plurality of far-field operation terminals 20. In this case, for example, in a case where communication with some of the plurality of far-field operation terminals 20 is cut off in a state where the mode is set to the far-field mode, the automatic traveling system 1 may continue automatic traveling of the work vehicle 10, as far as at least one of the far-field operation terminals 20 is connected to the work vehicle 10. In this case, in a case where communication with all of the far-field operation terminals 20 is cut off, the automatic traveling system 1 temporarily stops automatic traveling of the work vehicle 10.

Further, as another embodiment, the automatic traveling system 1 may be able to connect one far-field operation terminal 20 to a plurality of work vehicles 10. In this case, for example, in a case where communication with the far-field operation terminal 20 is cut off in a state where the mode is set to the far-field mode, the automatic traveling system 1 temporarily stops automatic traveling of all of the work vehicles 10 connected to the far-field operation terminal 20. Note that, as another embodiment, the automatic traveling system 1 may continue automatic traveling of a work vehicle 10 being connected to the near-field operation terminal 30 among the plurality of work vehicles 10 connected to the far-field operation terminal 20 in which communication is cut off.

### <Automatic Traveling Continuation Processing>

The automatic traveling system 1 can be configured to permit a start instruction for automatic traveling by the far-field operation terminal 20 on the condition that the near-field operation terminal 30 is connected to the work vehicle 10 in the far-field mode. However, also in this configuration, when the near-field operation terminal 30 is moved out of the predetermined range AR, and communication with the work vehicle 10 is cut off, there occurs a problem that automatic traveling of the work vehicle 10 cannot be started by the far-field operation terminal 20 even in the far-field mode.

In view of the above, in order to solve the above-described problem, the automatic traveling system 1 may include a configuration in which a connection state between the near-field operation terminal 30 and the work vehicle 10 is maintained, in a case where the mode is set to the far-field mode. For example, in a case where a worker carrying the near-field operation terminal 30 moves out of the predetermined range AR, the near-field operation terminal 30 is connected to a communication terminal (for example, a smartphone) carried by the worker, and connection with the work vehicle 10 is established via the communication terminal. This enables to perform a start instruction for automatic traveling by the far-field operation terminal 20, even in a case where the near-field operation terminal 30 is moved out of the predetermined range AR, because the connection state between the near-field operation terminal 30 and the work vehicle 10 can be maintained.

Note that, in a case of a state in which the near-field operation terminal 30 is connected to the work vehicle 10 via the communication terminal, the automatic traveling system 1 may permit a stop instruction for the work vehicle 10, a changing instruction for a vehicle speed, a changing instruction for an engine rotation speed, and the like by the near-field operation terminal 30, and may prohibit a start instruction for automatic traveling of the work vehicle 10.

### <Anti-theft Processing in Far-field Mode>

In a case where the mode is set to the far-field mode, the automatic traveling system 1 may be configured to be able to automatically lock a door, and release locking only by a smart key. Further, in a case where the work vehicle 10 has been unintentionally moved from a planned place, the automatic traveling system 1 may perform remote control of forcibly stopping the engine 131, and notify a monitoring person that the work vehicle 10 has been moved. Further, in the far-field mode, the automatic traveling system 1 may be configured not to move the work vehicle 10 until a permittance signal is input from a permitted operation terminal.

As described above, in the above-described embodiment, the automatic traveling system 1 is equivalent to a movement control system according to the present invention, however, the movement control system according to the present invention may be constituted of the vehicle control device 11 alone, or may be constituted of the far-field operation terminal 20 and the near-field operation terminal 30.

### REFERENCE SIGNS LIST

1 Automatic traveling system
10 Work vehicle
11 Vehicle control device
20 Far-field operation terminal (second operation terminal)
21 Operation control unit
30 Near-field operation terminal (first operation terminal)
53 Camera
111 Control processing unit
211 Setting processing unit
212 Display processing unit
213 Acceptance processing unit
AR Predetermined range
F Field
P1 Map screen
P2 Operation screen (camera screen)

## Claims

1. A movement control method of controlling movement of a work vehicle by a first operation terminal capable of moving the work vehicle within a predetermined range with respect to the work vehicle, and a second operation terminal capable of moving the work vehicle out of the predetermined range with respect to the work vehicle, the movement control method **characterized in that** the method comprises:
setting either of a first mode in which movement of the work vehicle by the first operation terminal is permitted, and a second mode in which movement of the work vehicle by the second operation terminal is permitted; and
setting a movement content by which the first operation terminal is capable of moving the work vehicle, and a movement content by which the second operation terminal is capable of moving the work vehicle, based on the set mode.

2. The movement control method according to claim 1, comprising:
acquiring a connection state between the work vehicle and the first operation terminal, and a connection state between the work vehicle and the second operation terminal; and
setting each of the movement contents, based on the mode and each of the connection states.

3. The movement control method according to claim 2, comprising
temporarily stopping or continuing automatic traveling of the work vehicle, based on the mode and each of the connection states.

4. The movement control method according to claim 2, comprising:
acquiring a display content of the second operation terminal, in a case where the mode is set to the second mode; and
setting each of the movement contents, based on the mode, each of the connection states, and the display content.

5. The movement control method according to claim 4, comprising:
setting, to a first movement content, the movement content by which the second operation terminal is capable of moving the work vehicle, in a case where the display content is a first screen on which movement setting on the work vehicle is enabled; and
not setting the movement content by which the second operation terminal is capable of moving the work vehicle, or setting, to a movement content being a part of the first movement content, the movement content by which the second operation terminal is capable of moving the work vehicle, in a case where the display content is a second screen on which at least a part of movement setting on the work vehicle is restricted.

6. The movement control method according to claim 1, comprising
setting, to a first movement content, the movement content by which the first operation terminal is capable of moving the work vehicle, and not setting the movement content by which the second operation terminal is capable of moving the work vehicle, in a case where the mode is set to the first mode.

7. The movement control method according to claim 1, comprising
setting, to a first movement content, the movement content by which the first operation terminal is capable of moving the work vehicle, and setting, to a second movement content being a part of the first movement content, the movement content by which the second operation terminal is capable of moving the work vehicle, in a case where the mode is set to the second mode.

8. The movement control method according to claim 7, wherein
the first movement content includes movement of starting automatic traveling of the work vehicle, and movement of stopping automatic traveling of the work vehicle, and
the second movement content includes movement of stopping automatic traveling of the work vehicle, and does not include movement of starting automatic traveling of the work vehicle.

9. The movement control method according to claim 1, wherein
a plurality of combinations are registered in advance in which the mode, the movement content by which the first operation terminal is capable of moving the work vehicle, and the movement content by which the second operation terminal is capable of moving the work vehicle are associated with one another, the movement control method comprising accepting a selecting operation by a user from among the plurality of combinations.

10. The movement control method according to claim 1, comprising
setting to the first mode, in a case where the first operation terminal is located within the predetermined range, and the first operation terminal and the work vehicle are connected to each other.

11. A movement control program that controls movement of a work vehicle by a first operation terminal capable of moving the work vehicle within a predetermined range with respect to the work vehicle, and a second operation terminal capable of moving the work vehicle out of the predetermined range with respect to the work vehicle, the movement control program **characterized in that** the program causes: one or a plurality of processors to execute:
setting either of a first mode in which movement of the work vehicle by the first operation terminal is permitted, and a second mode in which movement of the work vehicle by the second operation terminal is permitted; and
setting a movement content by which the first operation terminal is capable of moving the work vehicle, and a movement content by which the second operation terminal is capable of moving the work vehicle, based on the set mode.

12. A movement control system that controls movement of a work vehicle by a first operation terminal capable of moving the work vehicle within a predetermined range with respect to the work vehicle, and a second operation terminal capable of moving the work vehicle out of the predetermined range with respect to the work vehicle, **characterized in that**
the movement control system sets either of a first mode in which movement of the work vehicle by the first operation terminal is permitted, and a second mode in which movement of the work vehicle by the second operation terminal is permitted, and
sets a movement content by which the first operation terminal is capable of moving the work vehicle, and a movement content by which the second operation terminal is capable of moving the work vehicle, based on the set mode.

## Patentansprüche

1. Bewegungssteuerungsverfahren zum Steuern einer Bewegung eines Arbeitsfahrzeugs durch ein erstes Bedienterminal, das dazu fähig ist, das Arbeitsfahrzeug innerhalb eines vorbestimmten Bereichs in Bezug auf das Arbeitsfahrzeug zu bewegen, und durch ein zweites Bedienterminal, das dazu fähig ist, das Arbeitsfahrzeug aus dem vorbestimmten Bereich in Bezug auf das Arbeitsfahrzeug hinaus zu bewegen, wobei das Bewegungssteuerungsverfahren **dadurch gekennzeichnet ist, dass** das Verfahren Folgendes umfasst:
Einstellen von einem von einem ersten Modus, in dem eine Bewegung des Arbeitsfahrzeugs durch das erste Bedienterminal ermöglicht ist, und einem zweiten Modus, in dem eine Bewegung des Arbeitsfahrzeugs durch das zweite Bedienterminal ermöglicht ist; und
Einstellen eines Bewegungsinhalts, durch den das erste Bedienterminal dazu fähig ist, das Arbeitsfahrzeug zu bewegen, und eines Bewegungsinhalts, durch den das zweite Bedienterminal dazu fähig ist, das Arbeitsfahrzeug zu bewegen, auf Basis des eingestellten Modus.

2. Bewegungssteuerungsverfahren nach Anspruch 1, umfassend:
Erfassen eines Verbindungszustands zwischen dem Arbeitsfahrzeug und dem ersten Bedienterminal, und eines Verbindungszustands zwischen dem Arbeitsfahrzeug und dem zweiten Bedienterminal; und
Einstellen von jedem der Bewegungsinhalte auf Basis des Modus und jedem der Verbindungszustände.

3. Bewegungssteuerungsverfahren nach Anspruch 2, umfassend
temporäres Anhalten oder Fortsetzen des automatischen Fahrens des Arbeitsfahrzeugs auf Basis des Modus und jedem der Verbindungszustände.

4. Bewegungssteuerungsverfahren nach Anspruch 2, umfassend:
Erfassen eines Anzeigeinhalts des zweiten Bedienterminals in einem Fall, in dem der Modus auf den zweiten Modus eingestellt ist; und
Einstellen von jedem der Bewegungsinhalte auf Basis des Modus, jedem der Verbindungszustände und des Anzeigeinhalts.

5. Bewegungssteuerungsverfahren nach Anspruch 4, umfassend:
Einstellen, auf einen ersten Bewegungsinhalt, des Bewegungsinhalts, durch den das zweite Bedienterminal dazu fähig ist, das Arbeitsfahrzeug zu bewegen, in einem Fall, in dem der Anzeigeinhalt ein erster Bildschirm ist, auf dem eine Bewegungseinstellung an dem Arbeitsfahrzeug aktiviert wird; und
Nicht-Einstellen des Bewegungsinhalts, durch den das zweite Bedienterminal dazu fähig ist, das Arbeitsfahrzeug zu bewegen, oder Einstellen, auf einen Bewegungsinhalt, der Teil des ersten Bewegungsinhalts ist, des Bewegungsinhalts, durch den das zweite Bedienterminal dazu fähig ist, das Arbeitsfahrzeug zu bewegen, in einem Fall, in dem der Anzeigeinhalt ein zweiter Bildschirm ist, auf dem mindestens ein Teil einer Bewegungseinstellung an dem Arbeitsfahrzeug eingeschränkt wird.

6. Bewegungssteuerungsverfahren nach Anspruch 1, umfassend
Einstellen, auf einen ersten Bewegungsinhalt, des Bewegungsinhalts, durch den das erste Bedienterminal dazu fähig ist, das Arbeitsfahrzeug zu bewegen, und Nicht-Einstellen des Bewegungsinhalts, durch den das zweite Bedienterminal dazu fähig ist, das Arbeitsfahrzeug zu bewegen, in einem Fall, in dem der Modus auf den ersten Modus eingestellt ist.

7. Bewegungssteuerungsverfahren nach Anspruch 1, umfassend
Einstellen, auf einen ersten Bewegungsinhalt, des Bewegungsinhalts, durch den das erste Bedienterminal dazu fähig ist, das Arbeitsfahrzeug zu bewegen, und Einstellen, auf einen zweiten Bewegungsinhalt, der Teil des ersten Bewegungsinhalts ist, des Bewegungsinhalts, durch den das zweite Bedienterminal dazu fähig ist, das Arbeitsfahrzeug zu bewegen, in einem Fall, in dem der Modus auf den zweiten Modus eingestellt ist.

8. Bewegungssteuerungsverfahren nach Anspruch 7, wobei
der erste Bewegungsinhalt eine Bewegung des Startens des automatischen Fahrens des Arbeitsfahrzeugs und eine Bewegung des Anhaltens des automatischen Fahrens des Arbeitsfahrzeugs beinhaltet, und
der zweite Bewegungsinhalt eine Bewegung des Anhaltens des automatischen Fahrens des Arbeitsfahrzeugs beinhaltet und eine Bewegung des Startens des automatischen Fahrens des Arbeitsfahrzeugs nicht beinhaltet.

9. Bewegungssteuerungsverfahren nach Anspruch 1, wobei
eine Vielzahl von Kombinationen im Voraus registriert ist, in denen der Modus, der Bewegungsinhalt, durch den das erste Bedienterminal dazu fähig ist, das Arbeitsfahrzeug zu bewegen, und der Bewegungsinhalt, durch den das zweite Bedienterminal dazu fähig ist, das Arbeitsfahrzeug zu bewegen, miteinander verknüpft sind, wobei das Bewegungssteuerungsverfahren das Akzeptieren eines Auswahlvorgangs durch einen Benutzer aus der Vielzahl von Kombinationen umfasst.

10. Bewegungssteuerungsverfahren nach Anspruch 1, umfassend
Einstellen des ersten Modus, in einem Fall, in dem das erste Bedienterminal sich innerhalb des vorbestimmten Bereichs befindet, und das erste Bedienterminal und das Arbeitsfahrzeug miteinander verbunden sind.

11. Bewegungssteuerungsprogramm, das eine Bewegung eines Arbeitsfahrzeugs durch ein erstes Bedienterminal, das dazu fähig ist, das Arbeitsfahrzeug innerhalb eines vorbestimmten Bereichs in Bezug auf das Arbeitsfahrzeug zu bewegen, und durch ein zweites Bedienterminal, das dazu fähig ist, das Arbeitsfahrzeug aus dem vorbestimmten Bereich in Bezug auf das Arbeitsfahrzeug hinaus zu bewegen, steuert, wobei das Bewegungssteuerungsprogramm **dadurch gekennzeichnet ist, dass** das Programm veranlasst, dass ein oder eine Vielzahl von Prozessoren Folgendes ausführt:
Einstellen eines von einem ersten Modus, in dem eine Bewegung des Arbeitsfahrzeugs durch das erste Bedienterminal ermöglicht ist, und einem zweiten Modus, in dem eine Bewegung des Arbeitsfahrzeugs durch das zweite Bedienterminal ermöglicht ist; und
Einstellen eines Bewegungsinhalts, durch den das erste Bedienterminal dazu fähig ist, das Arbeitsfahrzeug zu bewegen, und eines Bewegungsinhalts, durch den das zweite Bedienterminal dazu fähig ist, das Arbeitsfahrzeug zu bewegen, auf Basis des eingestellten Modus.

12. Bewegungssteuerungssystem, das eine Bewegung eines Arbeitsfahrzeugs durch ein erstes Bedienterminal, das dazu fähig ist, das Arbeitsfahrzeug innerhalb eines vorbestimmten Bereichs in Bezug auf das Arbeitsfahrzeug zu bewegen, und durch ein zweites Bedienterminal, das dazu fähig ist, das Arbeitsfahrzeug aus dem vorbestimmten Bereich in Bezug auf das Arbeitsfahrzeug hinaus zu bewegen, steuert, **dadurch gekennzeichnet, dass**
das Bewegungssteuerungssystem einen von einem ersten Modus, in dem eine Bewegung des Arbeitsfahrzeugs durch das erste Bedienterminal ermöglicht ist, und einem zweiten Modus, in dem eine Bewegung des Arbeitsfahrzeugs durch das zweite Bedienterminal ermöglicht ist, einstellt, und
einen Bewegungsinhalt, durch den das erste Bedienterminal dazu fähig ist, das Arbeitsfahrzeug zu bewegen, und einen Bewegungsinhalt, durch den das zweite Bedienterminal dazu fähig ist, das Arbeitsfahrzeug zu bewegen, auf Basis des eingestellten Modus einstellt.

## Revendications

1. Procédé de commande de déplacement destiné à commander le déplacement d'un véhicule de travail au moyen d'un premier terminal d'exploitation capable de déplacer le véhicule de travail dans une plage prédéterminée par rapport au véhicule de travail, et d'un deuxième terminal d'exploitation capable de déplacer le véhicule de travail en dehors de la plage prédéterminée par rapport au véhicule de travail, le procédé de commande de déplacement étant **caractérisé en ce que** le procédé comprend :
le réglage de l'un ou l'autre parmi un premier mode dans lequel le déplacement du véhicule de travail par le premier terminal d'exploitation est autorisé, et un deuxième mode dans lequel le déplacement du véhicule de travail par le deuxième terminal d'exploitation est autorisé ; et
le réglage d'un contenu de déplacement par lequel le premier terminal d'exploitation est capable de déplacer le véhicule de travail, et d'un contenu de déplacement par lequel le deuxième terminal d'exploitation est capable de déplacer le véhicule de travail, sur la base du mode réglé.

2. Procédé de commande de déplacement selon la revendication 1, comprenant :
l'acquisition d'un état de connexion entre le véhicule de travail et le premier terminal d'exploitation, et d'un état de connexion entre le véhicule de travail et le deuxième terminal d'exploitation ; et
le réglage de chacun des contenus de déplacement, sur la base du mode et de chacun des états de connexion.

3. Procédé de commande de déplacement selon la revendication 2, comprenant
l'arrêt temporaire ou la poursuite du déplacement automatique du véhicule de travail, sur la base du mode et de chacun des états de connexion.

4. Procédé de commande de déplacement selon la revendication 2, comprenant :
l'acquisition d'un contenu d'affichage du deuxième terminal d'exploitation, dans un cas où le mode est réglé sur le deuxième mode ; et
le réglage de chacun des contenus de déplacement, sur la base du mode, de chacun des états de connexion, et du contenu d'affichage.

5. Procédé de commande de déplacement selon la revendication 4, comprenant :
le réglage, sur un premier contenu de déplacement, du contenu de déplacement par lequel le deuxième terminal d'exploitation est capable de déplacer le véhicule de travail, dans un cas où le contenu d'affichage est un premier écran sur lequel le réglage du déplacement du véhicule de travail est activé ; et
l'absence de réglage du contenu de déplacement par lequel le deuxième terminal d'exploitation est capable de déplacer le véhicule de travail, ou le réglage, sur un contenu de déplacement constituant une partie du premier contenu de déplacement, du contenu de déplacement par lequel le deuxième terminal d'exploitation est capable de déplacer le véhicule de travail, dans un cas où le contenu d'affichage est un deuxième écran sur lequel au moins une partie du réglage du déplacement du véhicule de travail est restreinte.

6. Procédé de commande de déplacement selon la revendication 1, comprenant
le réglage, sur un premier contenu de déplacement, du contenu de déplacement par lequel le premier terminal d'exploitation est capable de déplacer le véhicule de travail, et l'absence de réglage du contenu de déplacement par lequel le deuxième terminal d'exploitation est capable de déplacer le véhicule de travail, dans un cas où le mode est réglé sur le premier mode.

7. Procédé de commande de déplacement selon la revendication 1, comprenant
le réglage, sur un premier contenu de déplacement, du contenu de déplacement par lequel le premier terminal d'exploitation est capable de déplacer le véhicule de travail, et le réglage, sur un deuxième contenu de déplacement constituant une partie du premier contenu de déplacement, du contenu de déplacement par lequel le deuxième terminal d'exploitation est capable de déplacer le véhicule de travail, dans un cas où le mode est réglé sur le deuxième mode.

8. Procédé de commande de déplacement selon la revendication 7, dans lequel
le premier contenu de déplacement inclut le déplacement consistant à démarrer le déplacement automatique du véhicule de travail, et le déplacement consistant à arrêter le déplacement automatique du véhicule de travail, et
le deuxième contenu de déplacement inclut le déplacement consistant à arrêter le déplacement automatique du véhicule de travail, et n'inclut pas le déplacement consistant à démarrer le déplacement automatique du véhicule de travail.

9. Procédé de commande de déplacement selon la revendication 1, dans lequel
une pluralité de combinaisons sont enregistrées à l'avance, dans lesquelles le mode, le contenu de déplacement par lequel le premier terminal d'exploitation est capable de déplacer le véhicule de travail, et le contenu de déplacement par lequel le deuxième terminal d'exploitation est capable de déplacer le véhicule de travail sont associés les uns aux autres, le procédé de commande de déplacement comprenant l'acceptation d'une opération de sélection par un utilisateur parmi la pluralité de combinaisons.

10. Procédé de commande de déplacement selon la revendication 1, comprenant
le réglage sur le premier mode, dans un cas où le premier terminal d'exploitation est situé dans la plage prédéterminée, et où le premier terminal d'exploitation et le véhicule de travail sont connectés l'un à l'autre.

11. Programme de commande de déplacement qui commande le déplacement d'un véhicule de travail au moyen d'un premier terminal d'exploitation capable de déplacer le véhicule de travail dans une plage prédéterminée par rapport au véhicule de travail, et d'un deuxième terminal d'exploitation capable de déplacer le véhicule de travail en dehors de la plage prédéterminée par rapport au véhicule de travail, le programme de commande de déplacement étant **caractérisé en ce que** le programme amène un ou une pluralité de processeurs à exécuter :
le réglage de l'un ou l'autre parmi un premier mode dans lequel le déplacement du véhicule de travail par le premier terminal d'exploitation est autorisé, et un deuxième mode dans lequel le déplacement du véhicule de travail par le deuxième terminal d'exploitation est autorisé ; et
le réglage d'un contenu de déplacement par lequel le premier terminal d'exploitation est capable de déplacer le véhicule de travail, et d'un contenu de déplacement par lequel le deuxième terminal d'exploitation est capable de déplacer le véhicule de travail, sur la base du mode réglé.

12. Système de commande de déplacement qui commande le déplacement d'un véhicule de travail au moyen d'un premier terminal d'exploitation capable de déplacer le véhicule de travail dans une plage prédéterminée par rapport au véhicule de travail, et d'un deuxième terminal d'exploitation capable de déplacer le véhicule de travail en dehors de la plage prédéterminée par rapport au véhicule de travail, **caractérisé en ce que**
le système de commande de déplacement règle l'un ou l'autre parmi un premier mode dans lequel le déplacement du véhicule de travail par le premier terminal d'exploitation est autorisé, et un deuxième mode dans lequel le déplacement du véhicule de travail par le deuxième terminal d'exploitation est autorisé, et
règle un contenu de déplacement par lequel le premier terminal d'exploitation est capable de déplacer le véhicule de travail, et un contenu de déplacement par lequel le deuxième terminal d'exploitation est capable de déplacer le véhicule de travail, sur la base du mode réglé.
